# EUROPEAN PATENT SPECIFICATION

(11) **EP 3 387 804 B1**
(45) Date of publication and mention of the grant of the patent: **23.08.2023**
(21) Application number: 15813304.1
(22) Date of filing: 10.12.2015
(51) Int. Cl.: H04L 47/2408, H04L 43/026, H04L 47/2441, H04L 41/0893

(54) **TRAFFIC MONITORING IN A COMMUNICATION NETWORK**
VERKEHRSÜBERWACHUNG IN EINEM KOMMUNIKATIONSNETZ
SURVEILLANCE DE TRAFIC DANS UN RÉSEAU DE COMMUNICATION

(43) Date of publication of application: 17.10.2018
(73) Proprietor: Telecom Italia S.p.A., 20123 Milano (IT)
(72) Inventor: COCIGLIO, Mauro, 10148 Torino (IT); FASANO, Paolo, 10148 Torino (IT)
(74) Representative: Colombo, Stefano Paolo
(86) International application number: PCT/EP2015/079226
(87) International publication number: WO 2017/097359

(56) References cited:
- EP-A1- 3 278 503
- WO-A1-03/025766
- WO-A1-2009/146747
- WO-A1-2015/090364

## Description

### Technical field

The present invention relates to the field of communication networks. In particular, the present invention relates to a method for monitoring a data flow (in particular, a packet flow) in a communication network (in particular, a packet-switched communication network). Further, the present invention relates to a communication network implementing such method.

### Background art

In a packet-switched communication network, data are transmitted in the form of packets that are routed from a source node to a destination node through possible intermediate nodes. Exemplary packet-switched networks are IP (Internet Protocol) networks, Ethernet networks and MPLS (Multi-Protocol Label Switching) networks.

A packet flow is a packet stream carried in a packet-switched communication network. In particular, a packet flow is a stream of packets having a number of features in common. For instance, in a IP communication network, these features may include one or more of: the source IP address, the destination IP address, the source port address, the destination port address, the transport protocol.

As known, typically a packet flow is associated with a Class of Service (CoS). The CoS is an identification or a classification parameter introduced within the packets of the packet flow, which allows giving certain types of traffic (voice, video, data, etc.) priority over others.

At layer 3, the IP protocol provides for classifying packets by using the Differentiated Services (DS) field of the IP header of a packet. In particular a specific CoS may be assigned to each packet of the packet flow by using a 6-bit Differentiated Services Code Point (DSCP) value which allows implementing the so-called DiffServ architecture. Indeed, according to this model, traffic is divided into a small number of classes, and network resources are allocated on a per-class basis. DSCP values can be expressed in numeric form or by special standard-based names called Per-Hop Behaviors. As known, there are four broad classes of DSCP PHB markings: Best Effort (BE or DSCP 0), RFC 2474 Class Selectors (CS1-CS7), RFC 2597 Assured Forwarding PHBs (AFxy), and RFC 3268 Expedited Forwarding (EF). The EF class is typically associated with real-time traffic (e.g. voice).

At layer 2, each Ethernet frame can be associated with a respective CoS by using the Priority Code Point (PCP) field of the 802.1Q header. This field comprises three bits, and therefore 8 classes of services can be marked on each Ethernet frame.

At layer 2, in a MPLS network, the classes of service are typically mapped into the Multiprotocol Label Switching Experimental (MPLS EXP) bits. The EXP bits are a 3-bit field which allows defining 8 different classes of service.

As cited above, the CoS is a feature (or, attribute - these two terms will be interchangeably used throughout this description) that may be used to identify or classify packet flows. In general, the packet header comprises one or more fields and any field associated with one or more bits may be used to identify or classify packet flows. Moreover, network administrators may define "new" features to identify or classify packets based on specific values of unused bits in the packet header. Such "new" features may identify the packet flow only within a network domain managed by the network administrator which defined the feature. Before crossing the boundaries between different network domains, best practices generally require that the value assigned to any of these features should be reset to its default value.

A feature of a packet flow may be expressed, in general, as a range of values associated with a specific field contained within the header of the packets. For instance, at layer 3, a feature may be defined by a range of IP addresses (e.g., a list of addresses or an IP prefix) that could be found within the IP source address field or the IP destination address field. If the DSCP is used as identifying field carrying an identifying feature, such a feature may be represented, for example, by all DSCP values different from zero.

The use of ranges of values as identifying features for packet flows may introduce a "hierarchy". Indeed, a wide range of values may identify a certain packet flow within certain nodes of the network. A smaller range of values, which is included within the wider range of values, may be used in other network nodes to identify a new packet flow which is given by a subset of the packets belonging to the packet flow identified by the wider range of values. Hierarchical classification of packet flows may be used to perform specific actions on the packets within different nodes of the network.

As an example, at layer 3, the exemplary prefix 192.168.100/24 within the IP source address field may identify a given packet flow in a node of the network, and this identification may be used to perform specific actions on the packets belonging to that packet flow. In another node of the network, different actions could be applied to a subset of packets belonging to the packet flow defined above, the subset of packets being in turn identified by the value 192.168.10.12 within the IP source address field.

Additional features to identify or classify packet flows may be associated with external attributes. For example, all the packets entering the network from a given physical or logical port of an ingress node may be treated as a packet flow onto which certain actions should be applied. The same identification/classification may apply to all the packets exiting the network from a given physical or logical port of an egress node.

In a communication network, in particular an IP network, traffic monitoring techniques may be employed in order to trace and monitor a traffic flow. Traffic monitoring is usually related to activities such as identifying the traffic flows being propagated through the communication network, analysing the traffic flows and providing information about them, which may be used for network management purposes including accounting, routing, load balancing, etc. In particular, the collected information may be used by network operators to detect faults, interruptions and malfunctions possibly reported by the clients of the network. Indeed, for instance, if a traffic associated with a high CoS (e.g. real time traffic) is affected by a fault or performance degradation, a network operator should intervene in order not to decrease the quality of service (QoS) of that traffic. Intervention of the network operator may be driven by the information collected by monitoring the traffic flows, which may comprise the amount of bytes and/or packets passing through the monitoring points, which allows identifying the path followed by the packets and locate the fault.

US 6,243,667 B1 discloses a method and system for switching in networks responsive to message flow patterns. A message "flow" is defined to comprise a set of packets to be transmitted between a particular source and a particular destination. When routers in a network identify a new message flow, they determine the proper processing for packets in that message flow and cache that information for that message flow. Thereafter, when routers in a network identify a packet which is part of that message flow, they process that packet according to the proper processing for packets in that message flow. The proper processing may include a determination of a destination port for routing those packets and a determination of whether access control permits routing those packets to their indicated destination.

US 2011/0080835 A1 discloses a monitoring system for monitoring transport of data through interconnected nodes for processing data packets in a communication system, wherein said data packets conform to a layered transmission protocol, the system comprising: (1) a marking node for marking a packet selected according to a marking rule by placing a monitoring indicator in the lowest protocol layer thereof, said data packet having a first number of protocol layers, (2) at least, one packet processing node for forming a data packet based or the marked packet, such that said formed data packet comprises a second number of protocol layers that is different from said first number of protocol layers and such that said indicator is in the lowest protocol layer of said formed data packet, and (3); a monitoring node for monitoring said transport of data on the basis of the indicators in data packets that have passed through the at least one packet processing node.

WO 03/025766 A1 discloses a system and method for packet forwarding. The packet forwarding improves the performance of common network security applications. The system includes an operating system kernel (340), a plurality of packet forwarding paths, and a packet classifier. The method includes means for receiving network packets, means for receiving state information from a plurality of external agents, means for selecting a forwarding path (320) from a plurality of forwarding paths based on the state information, and means for transmitting packets.

WO 2009/146747 A1 discloses a monitoring system for monitoring transport of data through interconnected nodes for processing data packets in a communication system, wherein said data packets conform to a layered transmission protocol, the system comprising : (1) a marking node for marking a packet selected according to a marking rule by placing a monitoring indicator in the lowest protocol layer thereof, said data packet having a first number of protocol layers, (2) at least, one packet processing node for forming a data packet based or the marked packet, such that said formed data packet comprises a second number of protocol layers that is different from said first number of protocol layers and such that said indicator is in the lowest protocol layer of said formed data packet, and (3) a monitoring node for monitoring said transport of data on the basis of the indicators in data packets that have passed through the at least one packet processing node.

WO 2015/090364 A1 discloses a method for performing a time measurement on a packet flow transmitted through a communication network. The transmitting node divides the packets into first and second packets transmitted in alternating periods. At each period, transmitting node also marks each packet by setting a feature thereof to a first value indicating that the packet shall undergo time measurement or a second value indicating that the packet shall not undergo time measurement. The transmission times of two packets marked by the first value are reciprocally delayed by a predefined inter-transmission time shorter than a period duration. For each packet marked by the first value, the transmitting node generates a transmission time stamp and the receiving node generates a reception time stamp. Then, after the end of each period, a time measurement is performed based on transmission and reception timestamps of packets marked by the first value transmitted during the preceding period.

EP 3 278 503 A1 is a document falling under Art. 54(3) EPC. It discloses a method implemented by a node of a network domain having a plurality of nodes, where the node functions as an ingress node of the network domain for a data flow. The method enables data flow analysis across the network domain. The method includes receiving a data packet belonging to a data flow at an ingress node of the network domain, determining whether the data packet is to be marked for the data flow analysis, determining whether an egress node of the network domain for the data flow supports data packet marking, marking the data packet with a marking label indicating to supporting nodes in the network domain that the data packet is to be processed for data flow analysis, and forwarding the data packet toward the egress node of the network domain.

### Summary of the invention

The Applicant has noticed that the above known solutions for monitoring a data flow (in particular, a packet flow) in a communication network (in particular, a packet-switched communication network) have some drawbacks.

As to the method of US 6,243,667 B1, it requires that each packet that is forwarded within a router or switch is examined for a set of IP packet attributes (e.g. IP address of the source device, IP address of the destination device, protocol type) before being treated by the routing device. Treatment of packets may relate to, for example, switching, access control, accounting, or encryption. Therefore, the implementation of the cited method requires that all the routing devices of the network should be a priori configured to examine the packets having a given set of IP attributes, irrespective of the actual path followed by the packets of the flow to be monitored. This may lead to a waste of network resources. Moreover, each time a new data flow is to be monitored, a new configuration is to be set up on the routing devices specifying the IP attributes that identify the new data flow. This is disadvantageously inefficient.

Indeed, a communication network (in particular, a packet-switched communication network) may contain hundreds or thousands of nodes (such as routers, switches, etc.). A data flow (in particular, a packet flow) enters the network through one or more ingress nodes and exits through one or more egress nodes. Packets are carried from an ingress node to an egress node crossing intermediate nodes. In meshed network topologies, it is not possible to know in advance the path through which a packet travels. In fact, packets are routed according to rules defined by automated operations of the network nodes, including load balancing over different paths, rerouting in case of node or link failures, etc. This way of operation implies that packets belonging to a data flow could possibly cross any intermediate node within the network. To be sure to detect all the packets belonging to a data flow for monitoring purposes, packet identification or classification have to be accomplished at every intermediate nodes. The number of intermediate nodes multiplied by the number of data flows that may be present within the network may lead to an unsustainable number of classification rules to be deployed in the network nodes and an unmanageable burden of configuration effort.

In view of the above, the Applicant has tackled the problem of providing a method for monitoring a data flow (in particular, a packet flow) in a communication network (in particular, a packet-switched communication network), which overcomes the aforesaid drawbacks. In particular, the Applicant has tackled the problem of providing a method for monitoring a data flow (in particular, a packet flow) in a communication network (in particular, a packet-switched communication network), which allows a minimal pre-configuration of the network nodes, minimizes the number of classification rules to be deployed in the network nodes and automates the enforcement of given services of monitoring to the data flows.

In the following description and in the claims, the expression "service of monitoring" (briefly, "SoM"), will designate a service offered to a user/client/subscriber of a communication network by the network operator according to which a data traffic of the user/client/subscriber who requests for the service is monitored. This operation may include one or more of the following monitoring actions: identifying the data traffic to be monitored (in order to trace the route of the data traffic), counting the data units (i.e. packets, portions of packets, plesiochronous frames, portion of plesiochronous frames, synchronous frames, portion of synchronous frames) received and/or transmitted at one or more measuring points (in order to measure e.g. a data loss), timestamping the data units received and/or transmitted at one or more measuring points (in order to measure e.g. a jitter or a delay). As an example, different SoMs may be defined for monitoring different types of data traffic, such as IP, ADSL (Asymmetric Digital Subscriber Line), LTE (Long Term Evolution), GSM (Global System for Mobile communications), etc.

Furthermore, the term "user" or "client" of the communication network, or "subscriber to a SoM" may designate an entity which is generating or receiving data traffic through the communication network, which has requested a SoM in order to have its data traffic monitored by the communication network. These terms will be used interchangeably within the following description. Examples of users/clients/subscribers include private entities (i.e. persons) and business entities (i.e. companies). Moreover, they may include network internal entities (i.e. departments within the organization of the network operator). As an example, a SoM may be applied to monitor the data traffic generated by the branches of a company at given locations.

According to a first aspect, the present invention provides a method for monitoring a data flow in a communication network, the method comprising:
a) associating the data flow with a class of monitoring by marking data units of the data flow by setting a feature of the data units to a value indicating the class of monitoring;
b) determining the class of monitoring by detecting the feature in the data units and associating the data units with a service of monitoring on the basis of the class of monitoring; and
c) applying the service of monitoring for monitoring the data flow.

Preferably, marking comprises mapping the class of monitoring into a marking field of the data units.

Preferably, associating the data units with a service of monitoring is performed according to an identification policy, the identification policy comprising at least one identification rule associating the class of monitoring with the service of monitoring.

According to another embodiment, associating the data units with a service of monitoring is performed on the basis of the class of monitoring and one or more identifying attributes of the data flow.

According to this embodiment, associating the data units with a service of monitoring is performed according to an identification policy, the identification policy comprising at least one identification rule associating the class of monitoring and the one or more identifying attributes of the data flow with the service of monitoring

Preferably, the at least one identification rule comprises one or more ranges for the one or more identifying attributes of the packet flow.

Preferably, the method further comprises selecting a subset of data units on the basis of a selection policy comprising one or more further ranges for the one or more identifying attributes of the packet flow, the further ranges being equal to or smaller than the ranges of the identification rule.

Preferably, the one or more identifying attributes are comprised within a header of the data units.

Preferably, the one or more identifying attributes comprise one or more of: a source address, a destination address, a source port number, a destination port number, a transmission protocol, a class of service.

In all embodiments, applying the service of monitoring is performed according to a monitoring policy which is associated with the service of monitoring and specifies one or more monitoring actions to be performed on the marked data units.

According to embodiments of the method, selecting comprises sending a request to a monitoring center comprising the class of monitoring and the one or more identifying attributes, and receiving from the monitoring center the selection policy. The method may further comprise receiving also the monitoring policy from the monitoring center.

Preferably, the value indicating the class of monitoring is different from zero and wherein the method further comprises setting the feature to a value equal to zero in further data units belonging to a further packet flow if the further packet flow is not to be monitored.

Preferably, the method further comprises restoring the feature of the data units from the value indicating the class of monitoring to a further value associated with the service of monitoring.

In all embodiments, marking comprises subdividing the data flow in first blocks and second blocks, the first blocks alternating in time with the second blocks, by setting the feature of the data units of the first blocks to the value indicating the class of monitoring. In one of the two claimed alternative embodiments, the value indicating the class of monitoring is higher than 1, and setting the feature of the data units of the second blocks to a predetermined value equal to 1.

In the other of the two claimed embodiments, the value indicating the class of monitoring is different from 0, and setting the feature of the data units of the second blocks to a predetermined value equal to 0.

According to a second aspect, the present invention provides a node for a communication network, the node being configured to monitor a data flow, the node comprising:
- a marking point configured to associate the data flow with a class of monitoring by marking data units of the data flow by setting a feature of the data units to a value indicating the class of monitoring; and
- a measuring point configured to determine the class of monitoring by detecting the feature in the data units and associate the data units with a service of monitoring on the basis of the class of monitoring, and to apply the service of monitoring for monitoring the data flow.

According to a third aspect, the present invention provides a further node for a communication network, the further node being configured to monitor a data flow comprising marked data units, the marked data units comprising a feature which is set to a value indicating a class of monitoring associated with a service of monitoring, the node comprising:
- a measuring point configured to determine the class of monitoring by detecting the feature in the data units and associate the data units with a service of monitoring on the basis of the class of monitoring, and to apply the service of monitoring for monitoring the data flow.

According to a fourth aspect, the present invention provides a communication network comprising a node and a further node as set forth above.

### Brief description of the drawings

The present invention will become clearer from the following detailed description, given by way of example and not of limitation, to be read with reference to the accompanying drawings, wherein:
- Figure 1 schematically shows an exemplary packet-switched network;
- Figure 2 schematically shows a packet's structure, according to an embodiment of the present invention;
- Figure 3 is a flow chart of the method for monitoring a data flow (in particular, a packet flow) according to a first embodiment of the present invention;
- Figure 4 is a flow chart illustrating a second embodiment of the method according to the present invention;
- Figure 5 is a flow chart of the method according to a third embodiment of the present invention,; and
- Figure 6 is a flow chart of fourth embodiment of the method according to the present invention.

### Detailed description of preferred embodiments of the invention

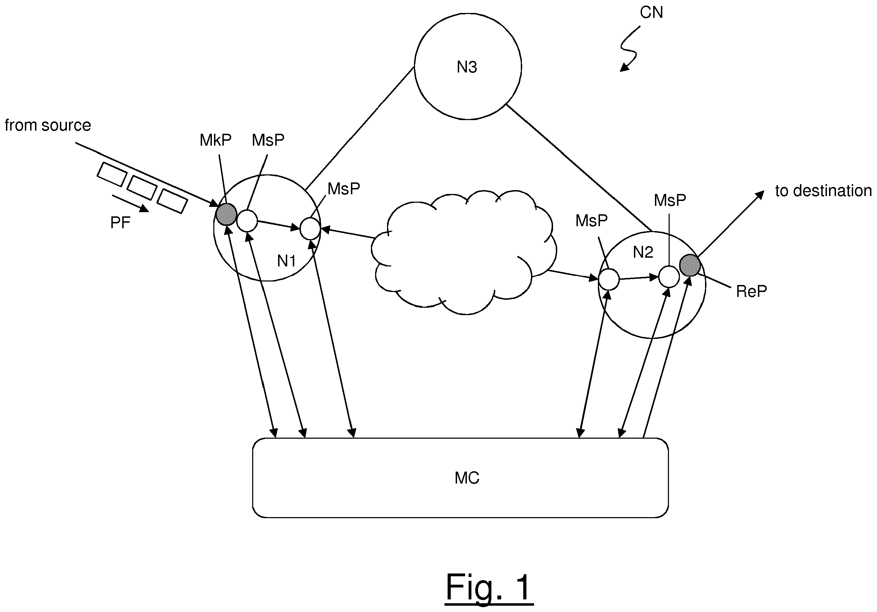

Figure 1 schematically shows an exemplary packet-switched communication network CN in which the method for monitoring a data flow (in particular, a packet flow, wherein the data unit is a packet) according to embodiments of the present invention may be implemented. The communication network CN may be an IP network, an Ethernet network, an MPLS network or any other known type of packet-switched communication network.

The communication network CN comprises a plurality of nodes reciprocally interconnected by links according to any known topology.

In particular, the communication network CN comprises a first node N1 and a second node N2. The first node N1 is configured to transmit a packet flow PF in the form of packets Pki to the second node, possibly through intermediate nodes (not shown in Figure 1) of the communication network CN. The packets Pki may be generated at the first node N1 or outside the communication network CN. In this latter case, the first node N1 is preferably the ingress node for the packets Pki, i.e. the node through which the packets Pki enter the communication network CN.

Similarly, the second node N2 may be either the destination node of the packets Pki or an intermediate node of the path from a source node to a destination node. For sake of example, in Figure 1, the transmitting node N1 receives the packets Pki from one or more source nodes (not shown in Figure 1) outside the communication network CN and the second node N2 transmits the packets Pki to one or more destination nodes which may be within the communication network CN or outside it (not shown in Figure 1). In this latter case, the second node N2 is preferably the egress node for the packets Pki, i.e. the node trough which the packets Pki exit the communication network CN.

It is to be noticed that packets are merely an example of data units that can be monitored by the method of the present invention. Indeed, the method may be similarly applied to other types of data units into which a data flow may be fragmented, such as, for instance, portions of packets, plesiochronous frames, portion of plesiochronous frames, synchronous frames, portion of synchronous frames.

Preferably, the communication network CN is also suitable for cooperating with a monitoring center MC, which will be described in greater detail herein after. The monitoring center MC may be either a stand-alone server connected to any of the nodes of the communication network CN. Alternatively, the monitoring center MC may be implemented at any of the nodes of the communication network CN through dedicated software and/or hardware.

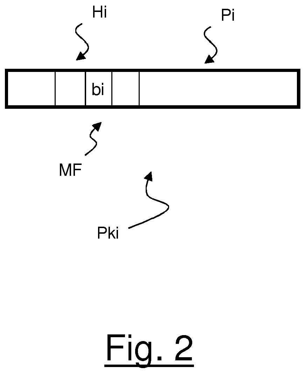

As shown in Figure 2, each packet Pki comprises a header Hi and a payload Pi. The payload Pi comprises data to be transmitted. Moreover, preferably, the header Hi comprises information for routing the packet Pki, such as the source node address (or, simply, source address) and the destination node address (or, simply, destination address).

The present invention provides a method for monitoring the packets of the packet flow PF within the communication network CN which allows applying, in an automatic manner, a given service of monitoring (or, simply, "SoM") on the packet flow.

In particular, the present invention provides for classifying the packets of the packet flow according with a "class of monitoring" or, briefly, "CoM". The CoM is an identification or classification parameter which, according to the present invention, is introduced within the packets of the packet flow. A CoM may be associated with one or more SoMs and allows applying to a packet flow one of these SoMs.

According to the present invention, the CoM is introduced within the header of the packet by using one or more bits of a given field, for each protocol layer. This field may be for instance a field to which the protocol according to which the packets Pki are formatted has not assigned a specific function yet. Alternatively, bits of a field having other uses may be used. If the CoM is mapped into a single bit of the header of the packet, its value may be 0 or 1 (such a class of monitoring will also be referred to in the following description as "on/off" CoM). If the CoM is mapped into multiple bits of the header of the packet it may have different integer values, each identifying a different class of monitoring. For instance, if the CoM is mapped into 3 bits, 8 values are available ranging from 0 to 7. As represented to Figure 2, each packet Pki of the packet flow PF comprises a marking field MF, which comprises at least one bit bi of a given field of the packet, and the class of monitoring is mapped into this marking field MF. The marking field MF is preferably comprised in the packet's header Hi. The operation of setting the bits of the marking field MF to a given value for introducing a CoM within a packet will be referred to, in the following description and in the claims, as the operation of "marking the packet".

According to preferred embodiments of the present invention, a CoM different from zero is used for marking packets to be monitored according to SoMs deployed within the communication network CN. Therefore, if 3 bits are used for mapping the CoM into the packet, the CoM may range between 1 and 7. On the contrary, a value equal to zero of these same bits may identify packets that are not associated with any actual service of monitoring deployed within the communication network CN.

In particular, according to an embodiment of the present invention, a "null" SoM may be deployed within the communication network CN for being associated with packets that are not to be monitored, namely with packets that are not associated with any actual service of monitoring deployed within the communication network CN. According to this embodiment, the "null" SoM is associated with a value of the bits of the marking field MF equal to zero, which means that for these packets the CoM is absent.

In case the CoM is mapped into multiple bits each value that the CoM may assume may have a one-to-one relationship with a specific SoM or a specific category of SoMs. In this latter case, additional identification or classification information is needed in order to identify the proper SoM to be applied to the packet. If the CoM is mapped into a single bit, it may indicate that the packet is to be monitored but additional identification or classification information is needed in order to identify the proper SoM to be applied to the packet, as it will be described in greater detail in the following lines. The "additional identification or classification information" preferably comprises one or more features or attributes contained within the header of the packet. These attributes may correspond to respective fields or portions of field of the packet header and will be referred to in the following description as "identifying attributes". For instance, in case of an IP communication network, the one or more attributes which may be used to identify or classify the packet for marking purposes comprise: IP source address, IP destination address, source port number, destination port number, transport protocol, Differentiated Services Code Point (DSCP). Additional attributes may comprise the physical or logical port through which the packets enter the communication network.

Each CoM may be associated with a single SoM or with a category of SoMs.

The method according to the present invention preferably comprises the following steps:
a) classifying a packet with a CoM and marking the packet accordingly;
b) identifying a marked packet and associating it with a SoM;
c) among the packets associated with a SoM, selecting a subset of packets onto which specific monitoring actions are to be performed;
d) applying the specific monitoring actions on the selected packets;
e) optionally, classifying a marked packet and restoring the packet.

Preferably, classifying and marking a packet comprise applying a marking policy that associates one or more classification rules with a CoM. Applying the marking policy comprises checking whether the packet matches with the corresponding set of classification rules. Checking whether the packet matches with the corresponding set of classification rules comprises checking whether one or more identifying attributes of the packet belong to given ranges specified in the classification rules. A classification rule may also specify that a given attribute of the packet should have a predetermined value in order for the packet to be marked with a specific CoM. For instance, a classification rule may specify a given physical port of a network node through which packets may enter the communication network. According to the present invention, when not otherwise specified, if the packet matches with the classification rules of a marking policy, the packet is marked with the corresponding CoM.

As mentioned above, in case of an IP communication network, at layer 3 (when layer 4 is UDP or TCP), the possible identifying attributes used for classifying the packets are: IP source address, IP destination address, transport protocol, source port, destination port, DSCP. The CoM may be mapped into the 3 least significant bits of the DSCP field, which are used as marking field MF. The 3 most significant bits of the DSCP are in this case used for the class of service. In this way, 8 values may be available for being used in the marking field MF according to the present invention:
- value 0, which means absence of CoM; and
- values 1-7, each associated with a respective different CoM.

Each SoM may be associated with one or more marking policies, each providing both classification rules and the associated CoM. Preferably, the marking policy contains a minimum number of classification rules that are necessary to classify the packets. A packet matching a set of classification rules of a given marking policy will be referred to also as "matching the marking policy".

According to the present invention, identifying a packet and associating it with a SoM comprises applying an identification policy. Preferably, the identification policy comprises at least one identification rule associating the CoM and, possibly, one or more identifying attributes of the marked packet with a SoM. The one or more identifying attributes of a marked packet may comprise one or more further attributes contained within the header of the packet. The identification rule may contain a value for the CoM and, possibly, ranges of values for the one or more further attributes used for identification. The identification policy is preferably applied in the monitoring center and/or in the nodes of the communication network which should perform the monitoring of the packet, as it will be described in greater detail herein after. For instance, at layer 3, in an IP communication network, an identification policy may specify that a given SoM is to be applied to packets associated with a given CoM and a given set of IP source addresses in the IP source address field. In this case, the identification rule of the identification policy may associate the CoM value to one or more IP prefixes of the IP source address field.

Preferably, the identification policy contains a minimum number of identification rules that are necessary to identify the packets associated with a given SoM. A packet matching a set of identification rules of a given identification policy will be referred to also as "matching the identification policy".

In case of an IP communication network, at layer 3 (when layer 4 is UDP or TCP), the possible attributes used for identifying the packets in combination with the CoM are: IP source address, IP destination address, transport protocol, source port, destination port, class of service.

Moreover, preferably, each packet to be monitored according to a given SoM within the communication network matches a single identification policy.

Preferably, a selection of a subset of packets, among the packets associated with the SoM, may be made, at a node of the communication network. This selection allows implementing a hierarchical classification of packets and allows applying, to the selected subset of packets, specific monitoring actions implemented at the node for providing the SoM. Indeed, according to the present invention, specific monitoring actions may be performed on different subsets of the packets associated with the SoM which are identified by means of the identification policy and those subsets of packets are selected by applying a selection policy. The selection policy is derived from the identification policy on the basis of selection policy creation instructions associated with the SoM. Selection of the packets is preferably performed on the basis of CoM and, possibly, the one or more identifying attributes of the marked packet, and the selection policy may specify specific ranges or discrete values for such attributes. The attributes used for selection preferably may comprise the attributes used for identification. Preferably, the ranges of the attributes specified in the selection policy are equal to or smaller than the ranges for the same attributes specified in the identification policy. The attributes used for selection may also comprise other attributes of the packets that are not used for identification purposes. In other words, a selection policy allows selecting packets at a lower level of the hierarchy needed for monitoring purposes than the identification policy.

For instance, at layer 3, at a node of an IP communication network, an identification policy may specify that a given SoM is to be applied to packets associated with a given CoM and a given set of IP source addresses in the IP source address field, this set being identified by one or more IP prefixes. In this case, the attribute used for identification is the IP source address of the packet. However, for identification purposes, only the prefix of the IP source address should be checked. One monitoring action to be performed according to the SoM may be a data loss measurement and the selection policy creation instructions may specify that such measurement is to be made to every different packet flow comprising a different IP source address within the range specified in the identification policy. The attribute used for selection is the same attribute used for identification, namely the IP source address. However, for selection purposes, the entire IP source address should be checked. Alternatively or in addition, different selection policies may be created at the considered node for monitoring packet flows comprising different couples of IP source address (within the set specified in the identification policy) and IP destination address. In this case, selection is based on two attributes of the packet, the IP source address and the IP destination address.

Any marked packet matching a selection policy at a node of the communication network (namely, any marked packet whose identifying attributes are within the ranges specified in the selection policy) is preferably monitored according to a monitoring policy associated with the SoM and with the selection policy. The monitoring policy preferably specifies one or more monitoring actions to be performed on the packet (such as, for instance, tracking, counting, timestamping).

For instance, if a SoM is to be applied to an LTE packet flow within a backhauling network segment (from an enodeB to the nodes of a packet core network, within a metro-regional aggregation area), the selection policy may specify that packets are monitored on the basis of the class of monitoring and the couple of source address and destination address, namely: in the uplink direction, the address of the eNodeB and the address of the Packet Data Network Gateway (PGW), and, in the downlink direction, the address of the Serving Gateway (SGW) and the address of the eNodeB. This is the case of a SoM devoted to internal operations of a service provider.

According to another example, if the SoM to which the user has subscribed to provides for monitoring packets related to a given user business location, the selection policy may specify that the selection is to be based on the class of monitoring and the IP source address contained in the header Hi of each packet Pki. Moreover, for instance, the selection policy may specify that selection is to be based on the class of monitoring and the routing prefix of the IP source address contained in the header Hi of the packet Pki. This is the case of a SoM dedicated to a given customer of a service provider, and can be part of a service offering.

Preferably, within the communication network providing a given SoM, each marked packet matches a single selection policy.

According to the present invention, restoring a packet that has been marked is an optional operation. It comprises, preferably, setting the one or more bits of the marking field MF of a packet to a value associated with the SoM. This value may be a default value defined within the SoM or the value that the one or more bits had before the operation of marking the packet. This operation is preferably performed at a node through which the packet exits the communication network CN providing the service of monitoring. It advantageously allows restoring the content of the packet to the data carried by the packet before marking. In this way, the packet may travel within the communication network CN with a format suitable for monitoring purposes and it may then exit the network CN with its original content.

Preferably, the operation of restoring is performed by applying a restoration policy that associates one or more classification rules with the value to be used to restore the packet. A classification rule may specify that the CoM and, possibly, a given attribute of the packet should have a predetermined value in order for the packet to be restored. Classification rules used for restoration may be the same classification rules used for marking. For instance, a classification rule may specify a given physical port of a network node through which packets may exit the communication network. The restoration policy may in turn specify that packets matching this classification rule (and, possibly, other classification rules involving other attributes) have to be restored with a given value.

Preferably, the restoration policy contains a minimum number of classification rules. A packet matching a set of classification rules of a given restoration policy will be referred to also as "matching the restoration policy".

Preferably, according to the present invention, the operation described above are performed by the following elements of the communication network CN:
- the monitoring center MC;
- at least one marking point MkP performing the operations of classification and marking;
- at least one measuring point MsP performing the operations of selection and monitoring; and
- optionally, at least one restoration point ReP performing the operations of classification of marked packets and restoration.

Preferably, the monitoring center MC is a centralized element configured to manage, control and coordinate the services of monitoring offered by the network operator within its communication network CN. The monitoring center MC may communicate with the nodes of the communication network CN to configure the nodes for monitoring purposes, as it will be described in detail herein after. Moreover, the monitoring center MC may communicate with the nodes also to collect monitoring results and error reports.

Preferably, marking points MkP are set up at ingress nodes of the communication network CN, i.e. nodes through which packets enter the communication network CN. This operation comprises configuring the ingress nodes as marking points by installing therein one or more marking policies. In particular, in the exemplary situation depicted in Figure 1, a marking point MkP is set up at node N1 through which the packet flow PF enters the communication network. Preferably, for each marking policy associated with a given SoM, the monitoring center MC holds a list of nodes of the communication network CN which may be configured as marking points MkP. The marking points MkP are preferably configured by the monitoring center MC at the deployment of a SoM in the communication network CN or when the network topology varies due, for instance, to the deployment of new nodes or new links.

A marking point MkP is preferably implemented at an ingress interface or port of an ingress node N1. For instance, if the packet flow PF to be monitored is an IP packet flow, the marking point MkP is implemented at an IP ingress interface of the ingress node N1. The marking point MkP is preferably implemented through a dedicated software and/or hardware.

According to the present invention, at each marking point MkP, a packet may match a single marking policy.

Preferably, measuring points MsP are set up at nodes which are crossed by the packets to be monitored. This operation may comprise configuring the nodes as measuring points by installing therein one or more selection policies and corresponding monitoring policies. In the exemplary network of Figure 1, a measuring point MsP is preferably set up at both an ingress interface and at a corresponding egress interface of each network node of the communication network CN along the route of the packet flow PF. For instance, if the packet flow PF to be monitored is an IP packet flow, the measuring points MsP are implemented at both the IP ingress and egress interfaces of the ingress node N1, at the IP ingress and egress interfaces of the egress node N2 and at the IP ingress and egress interfaces of any intermediate node therebetween.

According to embodiments of the present invention, a measuring point MsP is configured to inspect each packet and check if the packet is marked with a CoM. Moreover, it is preferably configured to check if the packet matches a selection policy installed locally ("local selection policy"). If both these conditions are false, no further action is taken by the measuring point MsP. If the packet matches a local selection policy, the measuring point preferably applies to the packet the monitoring policy associated with the selection policy. Otherwise, if the packet does not match any local selection policy, and the packet is marked, a new selection policy is preferably installed at the measuring point MsP. Details will be given in the following description.

Each measuring point MsP is preferably implemented through a dedicated software and/or hardware.

It is to be noticed that according to the present invention, the measuring points are not instantiated a priori at the nodes of the communication network CN. The nodes (in particular, the interfaces) hosting the measuring points are configured to apply the selection policy and the monitoring policy only upon detection of a marked packet. This means that those nodes do not have computational resources which are permanently assigned to implement the SoM. As it will be described in greater detail herein after, each node hosting a measuring point ca be configured to create the processing elements (counters, timers, etc.) needed for monitoring the packets only upon detection of marked packets and to cancel those processing elements when the node does not receive marked packets for a given amount of time.

According to embodiments of the present invention, restoration points ReP may be set up at egress nodes of the communication network CN, i.e. nodes through which packets exit the communication network CN. This operation comprises configuring the egress nodes as restoration points by installing therein one or more restoration policies. In particular, in the exemplary situation depicted in Figure 1, a restoration point ReP may be set up at node N2 through which the packet flow PF exits the communication network. Preferably, for each restoration policy associated with a given SoM, the monitoring center MC holds a list of nodes of the communication network CN which may be configured as restoration points ReP. The restoration points ReP are preferably configured by the monitoring center MC at the deployment of a SoM in the communication network CN or when the network topology varies due, for instance, to the deployment of new nodes or new links.

The restoration point ReP is preferably implemented at an egress interface or port of an egress node N2. For instance, if the packet flow PF to be monitored is an IP packet flow, the restoration point ReP is implemented at an IP egress interface of the egress node N2. The restoration point ReP is preferably implemented through a dedicated software and/or hardware.

According to the present invention, at each restoration point ReP, a packet may match a single restoration policy.

As depicted in Figure 1, the marking points MkP, the measuring points MsP and the restoration points ReP are preferably connected to the monitoring center MC. In particular, marking points MkP and restoration points ReP may receive data from the monitoring center MC while measuring points MsP may bidirectionally exchange data with the monitoring center MC.

According to the present invention, for deploying a service of monitoring within the communication network CN, information about the service of monitoring should be installed and stored at the monitoring center MC, by, e.g. the network operator. Preferably, for each service of monitoring, the information related to a SoM comprises:
- a class of monitoring;
- one or more marking policies, including classification rules and the corresponding classes of monitoring, as described above;
- for each marking policy, a list of network nodes that may act as ingress nodes for the users of the service of monitoring, where the marking policies are to be configured (list of marking points);
- an identification policy, which specifies the CoM and, possibly, ranges of values for one or more identifying attributes of the marked packets to be monitored;
- selection policy creation instructions which are used to create one or more selection policies on the basis of the identification policy;
- a monitoring policy specifying one or more monitoring actions to be performed on the marked packets;
- one or more restoration policies, including classification rules, the indication of the packet field(s) to be restored and possibly the one or more values used for the restoration, as described above; and
- for each restoration policy, a list of network nodes that may act as egress nodes for the users of the service of monitoring, where the restoration policies are to be configured (list of restoration points).

According to an embodiment of the present invention, in the communication network CN a packet that is not be monitored (namely, that is not associated with any actual service of monitoring) may be associated with the "null" SoM mentioned above. If the "null" SoM is deployed within the communication network CN, packets that are not to be monitored may be modified according to a corresponding monitoring policy associated with the "null" SoM, which provides for using, for the bits corresponding to the marking field MF, a value equal to zero.

It is to be noticed that application of the "null" SoM may be unnecessary in case the bits corresponding to the marking field MF, in packets that are not to be monitored, already have a value equal to 0. Instead, it is useful in case these bits have a value different from zero. Associating a packet which is not to be monitored with the "null" SoM may advantageously avoid unnecessary operations. Indeed, packets carrying a value equal to zero within the marking field are recognized as not being marked at the measuring points. In particular, these packets do not trigger any selection policy request to the monitoring center, which would unduly overload the computational resources of the monitoring center, causing delays.

If the "null" SoM is deployed within the communication network CN, the information related to the "null" SoM comprises:
- one or more marking policies, including classification rules;
- for each marking policy, a list of network nodes that may act as ingress nodes for the users of the "null" SoM, where the marking policies are to be configured (list of marking points);
- one or more restoration policies, including classification rules, the indication of the packet field(s) to be restored and possibly the one or more values used for the restoration, as described above; and
- for each restoration policy, a list of network nodes that may act as egress nodes for the users of the service of monitoring, where the restoration policies are to be configured (list of restoration points).

Upon deployment of a service of monitoring within the communication network CN, the corresponding policies (marking policy, identification policy, monitoring policy and, optionally, restoration policy), the selection policy creation instructions and the list of marking and restoration points are preferably installed and stored at the monitoring center MC by, e.g. the network operator responsible of the service of monitoring. In particular, in case of deployment of the "null" SoM, the corresponding marking policies and restoration policies are preferably installed and stored at the monitoring center MC.

Then, the monitoring center MC preferably configures the ingress nodes and the egress nodes of the network as marking points and restoration points, respectively, by installing therein the relevant marking policies and restoration policies, respectively. Moreover, the monitoring center MC may configure further nodes of the network as measuring points by installing therein, possibly, one or more selection policies and the associated monitoring policies. These further nodes are the nodes that may belong to the path followed by the packet flow of the service subscriber. They may be selected on the basis of the network topology and on the basis of the type of packet flow to be monitored (ponit-to-point, point-to-multipoint, multipoint-to-multipoint).

Moreover the monitoring center MC, when installing a selection policy in a measuring point MsP, may set a timer which specifies a pre-determined time interval during which the measuring point MsP applies the selection policy. At the expiration of the timer, the measuring point MsP is preferably configured to stop applying the selection policy. Alternatively or in addition, a timeout may be set at the measuring point MsP according to which the selection policy is no more applicable if the measuring point MsP does not receive marked packets matching the attributes specified in the selection policy for a pre-determined time interval.

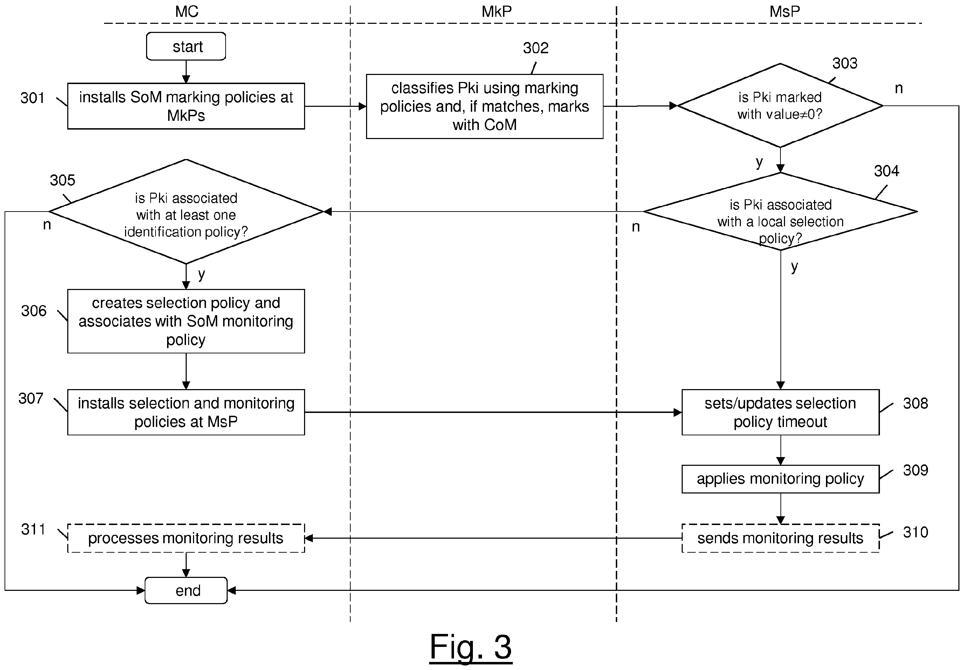

In the following description, the method for monitoring the packet flow PF within the communication network CN according to a first embodiment the present invention will be described with reference to the flow chart of Figure 3. It is to be noticed that the operations related to the measuring point MsP are preferably the same for all the measuring points MsP set up within the communication network CN. Therefore, in the following description, reference will be made to a generic "measuring point MsP".

As already mentioned above, it is assumed that the packet flow PF is the packet flow of a user of the communication network CN which has subscribed to a given SoM.

At step 301, upon subscription by the user to the SoM, the monitoring center MC preferably installs in the marking point MkP of the first node N1, though which the packet flow PF enters the communication network CN, one or more marking policies associated with the SoM. This step is performed once.

According to the present invention, a marking policy related to a given SoM may be installed at a marking point MkP each time a user subscribes to that SoM. The marking policy may then be removed from the marking point MkP when the SoM is suspended for the specific packet flow (e.g. when the user cancels the subscription to the SoM).

The following steps 302-304 are preferably repeated for each packet Pki of the packet flow PF to be monitored.

At step 302, the marking point MkP at the first node N1 preferably classifies the packet Pki of the packet flow PF, according to the classification rules contained in the one or more marking policies of the SoM. In particular, preferably, the marking point MkP inspects the packet Pki and checks whether one or more identifying attributes of the packet Pki (in particular, of the header Hi of the packet Pki) match with corresponding values specified in the classification rules of each marking policy. Then, preferably, if the packet Pki matches with the classification rules of one marking policy, it is marked by introducing the relevant CoM into the marking field MF. According to preferred embodiments of the present invention, the CoM is different from zero. In particular, according to the exemplary situation described above, the packet may be marked with a value between 1 and 7 within the 3 least significant bits of the DSCP field, which represent the marking field MF.

For instance, the marking policy may specify that the class of monitoring is the unique "on/off" class of monitoring and that in this case for marking the packet Pki the value of the marking bit bi of the marking field MF within the packet Pki shall be set to 1. Hence, in this case, at step 302, the marking point MkP marks the packet Pki by setting the value of the marking bit bi to 1. The operation of marking the packet Pki as described above is preferably repeated for each packet Pki of the packet flow PF to be monitored.

In case the packet Pki matches with the classification rules of two or more marking policies, the marking point MkP preferably classifies the packet Pki on the basis of the classification rules of one marking policy and generates a warning signal or message which is then sent to the monitoring center MC.

At step 303, the measuring point MsP preferably controls the packet Pki and detects the marking field MF. From the value of the marking field MF, the measuring point MsP preferably determines whether the packet Pki is marked or not. In the former case, the measuring point MsP preferably determines the class of monitoring associated with the marked packet Pki. If the packet is not marked, the procedure ends. According to preferred embodiments of the present invention, the check of step 303 is preferably performed by checking whether the value contained in the marking field MF of the packet Pki is different from zero. In the negative, the measuring point MsP preferably determines that the packet is not marked while, if the value is different from zero, the measuring point MsP preferably determines that the packet Pki is marked.

Then, at step 304, the measuring point MsP preferably checks whether the marked packet Pki is associated with a selection policy already installed at the measuring point MsP. In the flow chart of Figure 3, a selection policy already installed in the measuring point MsP is referred to as a "local selection policy". In order to determine whether the marked packet Pki is associated with a local selection policy, the measuring point MsP preferably checks whether the CoM and, possibly, the identifying attributes of the marked packet Pki match any local selection policy. In particular, the measuring point MsP may check whether the one or more identifying attributes of the marked packet Pki belong to given ranges (or, are equal to given values) specified within a local selection policy.

According to embodiments of the present invention, a selection policy for a given monitoring service SoM may be installed in each measuring point MsP upon definition of the corresponding monitoring service SoM within the communication network CN. According to alternative embodiments, a selection policy for a given monitoring service SoM may be installed "on demand" in the measuring point MsP, as it will be described herein after.

If, at step 304, the measuring point MsP finds a local selection policy matching with the CoM and, possibly, the identifying attributes of the marked packet Pki, the measuring point MsP preferably updates the timeout associated with the local selection policy (step 308) and applies to the packet Pki the monitoring policy associated with the local selection policy (step 309). The packet Pki is hence subject to the monitoring actions specified in the monitoring policy (e.g. packet tracing, packet tracing and counting, measurement of the packet loss and/or delay and/or jitter).

If, at step 304, the measuring point MsP does not find any local selection policy matching with the marked packet Pki, the measuring point MsP preferably generates and sends to the monitoring center MC a request for a selection policy (step not shown in the flowchart of Figure 3). The request preferably comprises the class of monitoring of the marked packet Pki and, possibly, the identifying attributes of the marked packet Pki.

At step 305, the monitoring center MC preferably selects the service of monitoring to be applied to the marked packet Pki using the identification policies installed therein. Upon reception of the request, the monitoring center CM preferably retrieves therefrom the CoM and, possibly, the identifying attributes of the packet and, on the basis of these values, preferably determines the identification policy that associates the CoM and, possibly, the identifying attributes of the marked packet Pki with the appropriate SoM. If at step 305 the packet Pki matches with two or more identification policies, the monitoring center MC preferably selects the SoM associated with one of such identification policies and generates a warning signal or message.

If at step 305 the marked packet Pki does not match with any identification policy, the procedure ends. Also in this case, a warning signal or message is generated by the monitoring center MC.

Once the SoM is identified, the monitoring center CM preferably uses the selection policy creation instructions associated with the SoM and with the identification policy to create the selection policy. Then the monitoring center preferably associates the selection policy to the SoM monitoring policy (step 306) and installs both of them in the measuring point MsP (step 307).

According to embodiments of the present invention, the monitoring center MC, when installing "on demand" the selection policy in the measuring point MsP as described above, may also set a timer which specifies a pre-determined time interval during which the measuring point MsP applies the selection policy. At the expiration of the timer, the measuring point MsP is preferably configured to stop applying the selection policy. Alternatively or in addition, a timeout may be set at the measuring point MsP according to which the selection policy is no more applicable if the measuring point MsP does not receive marked packets matching the attributes specified in the selection policy (e.g. a given source address) for a pre-determined time interval. This is depicted in the flowchart of Figure 3 at step 308.

The procedure described above with reference to steps 305, 306 and 307 of the method according to this first embodiment is particularly advantageous to implement subscription based services, as it allows defining a selection policy in a dynamic manner, as it will be described in greater detail herein after.

Advantageously, as described above, a selection policy may be installed in the measuring points MsP either a priori, upon definition of the SoM, or upon request from the measuring point MsP. In the former case, the selection policy is a "static" selection policy, which is defined once upon deployment of the SoM. This kind of selection policy may be conveniently used when few SoMs are to be applied at the measuring points MsP and when the packet flows PF are a priori identifiable by one or more distinguishable attributes (e.g. the IP source addresses of the packets have the same routing prefix).

On the other hand, the installation upon request or "on demand" of the selection policy advantageously allows applying a wide variety of SoMs at the measuring points MsP. Moreover, it allows installing in the measuring points MsP only the selection policies related to SoMs actually active within the communication network CN, thus saving computational resources at the measuring points. This kind of installation allows using "dynamic" selection policies. A "dynamic" selection policy is a selection policy which may change according to changing conditions under which the SoM is applied, for instance the number of users subscribing to it. For instance, a dynamic selection policy may be advantageously applied when a SoM is to be applied to packet flows that may be identified only on a subscriber basis (subscription based service).

In the following lines, an exemplary situation of a dynamic management of the selection policy will be described.

According to this example, a SoM, in particular a subscription based SoM, may be defined for a group of users identified by their IP addresses. It is assumed that the IP addresses of the service subscribers can not be aggregated in a subnet. Upon definition of the SoM for the first user who subscribes to it, a marking policy, an identification policy and a monitoring policy may be added at the monitoring center MC. The marking policy specifies a classification rule according to which the packets of the first user are marked with a given CoM. The identification policy associates the SoM with the CoM and the IP address of the first user. The marking policy is then installed in the marking point at the ingress node. No selection policy is installed in the measuring points MsP along the path of the packet flow of this first user. At the marking point MkP of the first user, the packet flow is marked according to the marking policy, for instance packets belonging to the packet flow are marked by setting the value of the marking bit to 1 ("on/off" CoM). When the first packet of the packet flow of the first user arrives at a measuring point MsP, the measuring point MsP does not find any match with a local selection policy and hence it sends a request to the monitoring center MC. The request contains the class of monitoring and the attributes of the packet and hence it contains the IP address of the first user. The monitoring center MC checks its database and finds the identification policy associating the SoM with the class of monitoring and the IP address contained in the request, elaborates a selection policy, associates it with the monitoring policy of the SoM and sends them to the measuring points MsP along the path of the packet flow of the first user. Therefore, each time the measuring point MsP receives a packet from the packet flow of the first user, the measuring point MsP applies the selection policy and the monitoring policy associated with the selection policy for monitoring the packet flow.

When a second user subscribes to the SoM, the marking policy is installed in the marking point of the second user ingress node and the identification policy may be updated, correlating the SoM with the class of monitoring, the IP address of the first user and the IP address of the second user. When the first packet of the packet flow of the second user arrives at a measuring point MsP (after having been marked at the marking point), the measuring point MsP does not find any match with a local selection policy and hence it sends a request to the monitoring center MC. The request contains the class of monitoring and the IP address of the second user. The monitoring center MC checks its database and finds the identification policy matching the class of monitoring and the IP address contained in the request in the updated entry, and associates them with the SoM. Then, the monitoring center MC updates the selection policy allowing to select the packets to be monitored on the basis of the class of monitoring and the IP address of the first user so that packets may be selected also on the basis of the class of monitoring and the IP address of the second user. The monitoring center MC sends the updated selection policy to the measuring points MsP along the path of the packet flow of the second user. Therefore, each time the measuring point MsP receives a packet from the packet flow of the second user, the measuring point MsP applies the selection policy and selects the packets of both the first user and the second user.

Referring back to the flow chart of Figure 3, at step 310, the measuring point MsP preferably sends the results of the monitoring actions performed on the packets Pki to the monitoring center MC. This step, and the next one, are indicated in a dashed box because, contrary to the preceding steps of the method of the present invention, they are preferably not performed for each packet Pki of the packet flow PF. Sending the monitoring results to the monitoring center MC may be performed only once, at the expiration of a timeout during which no packets Pki of the packet flow PF are received at the measuring point MsP. Alternatively, sending the monitoring results to the monitoring center MC may be performed periodically. The mode according to which the results are sent to the monitoring center MC (either only once or periodically) is preferably specified in the monitoring policy, which in the latter case also specifies the period. Moreover, together with the monitoring results, the measuring point MsP may also send to the monitoring center MC further related information that may comprise: an identifier of the measuring point MsP, an identifier of the network node on which the measuring point MsP is instantiated, an indication of the monitoring service SoM that is applied, an indication about the date and time-of-the-day at which the results have been collected.

At step 311, the monitoring center MC preferably processes the monitoring results in order to derive information about the packet flow PF. Processing of the monitoring results may be performed only once, at the expiration of a timeout during which no packets Pki of the packet flow PF are received at the measuring points MsP. Alternatively, step 311 may be performed periodically. The results of the processing performed at the monitoring center MC may be sent to a network management center. Then, the network management center can take actions on the basis of the results of the SoM. These actions may involve, for instance, rerouting the packets if a failure is detected on the basis of the monitoring results.

As mentioned above, one SoM that may be deployed within a communication network CN is a service which traces the packets of a packet flow or counts them at the measuring points MsP. For instance, the packet flow may be an IP packet flow and the SoM provides for tracing the packets of an IP packet flow on the basis of the IP source address and IP destination address comprised within the packets of the packet flow. For each user that has subscribed this SoM, a marking point MkP is set up in correspondence of the IP ingress interface of the ingress node through which the packet flow of the user enters the communication network. In the marking point MkP, a marking policy is instantiated specifying that the packets containing a specific couple of IP source address and IP destination address shall be marked. Then, a number of measuring points MsP is set up in correspondence of the IP ingress and egress interfaces of the nodes along the path of the packet flow. The marking point MkP marks each packet of the packet flow in correspondence of the marking field. The "on/off" CoM may be used, according to which the value of the bit bi of the marking field MF is set to 1 each time a packet of the packet flow to be monitored arrives at the marking point MkP.

At a measuring point MsP, the marked packets are identified. The selection policy and the monitoring policy may be a priori installed in the measuring point MsP by the monitoring center MC or they may be requested to the monitoring center MC at the reception of the first packet of the packet flow of the first user which has subscribed to the service. The selection policy allows to select packets to be monitored on the basis of the class of monitoring (namely, in this exemplary case, the "on/off" class of monitoring) and the IP addresses contained within the packet.

The monitoring policy is applied and the packets of the packet flow of the first user are traced at the measuring points MsP. In particular, at each measuring point MsP a counter may be set up which counts the packets of the packet flow to be monitored. Then, the measuring points MsP may periodically (e.g. every five minutes) transmit to a network management center the values of the respective counters and the associated IP source/destination addresses.

The operations above are repeated each time a new packet flow belonging to a user which has subscribed to the SoM is received at the respective marking point MkP (in this case, a packet flow with a new couple of IP source and destination addresses). In particular, each time a measuring point MsP receives the first packet of the new packet flow, it sets up a new counter for tracing the packets of the new packet flow.

The network management center may then receive every few minutes, via the monitoring center MC, the values of all the counters that have been set up at the measuring points MsP with the associated IP source/destination addresses. On the basis of the network topology and the IP address allocation policy, the network management center is therefore enabled to trace the packet flows of the users that have subscribed to the SoM. In particular, the network management center may evaluate when and where the routing of the packets changes and the packets are deviated with respect to their normal path, or detect failures that interrupt the packet route and decide to deviate the packet route in order to circumvent the failure. Moreover, on the basis of the tracing results between two given nodes of the communication network, it is possible to activate a periodic ping between those nodes in order to associate with the results of the tracing service delay information obtained through the ping packet.

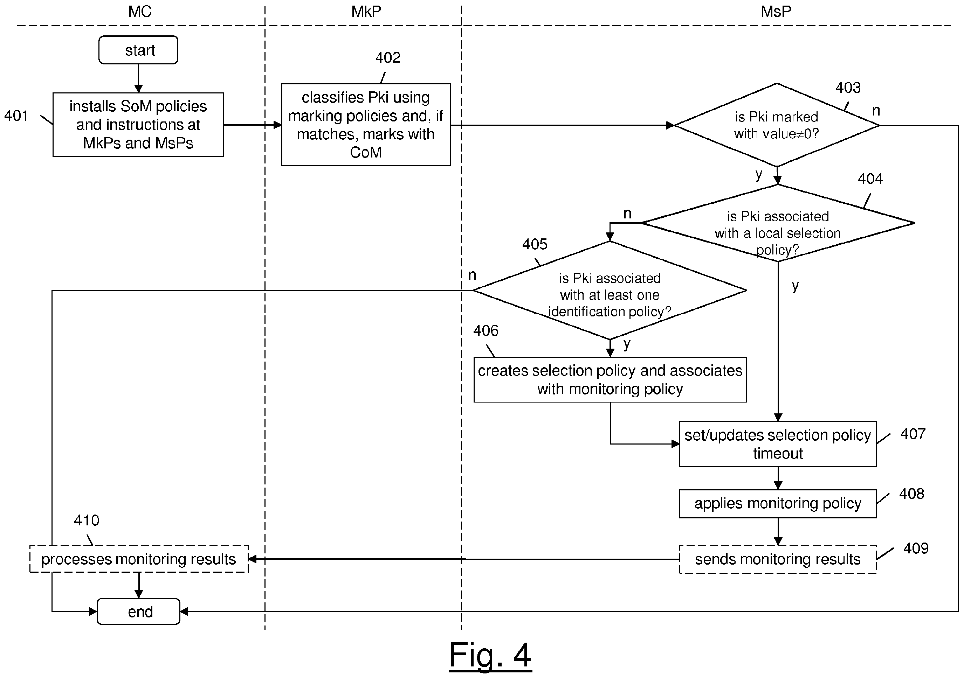

Figure 4 is a flowchart of the method for monitoring a packet flow according to a second embodiment of the present invention.

According to this second embodiment, at the deployment of a service of monitoring, the monitoring center MC preferably installs the identification policy, the monitoring policy and the selection policy creation instructions at the measuring points MsP (step 401). Moreover, the monitoring center MC preferably installs the marking policy and, optionally the restoration policy at, respectively, the marking points MkP and the restoration points ReP.

Steps 402, 403 and 404 are the same as steps 302, 303, 304 described above with reference to the flow chart of Figure 3. Therefore, a detailed description of these steps is omitted. At steps 405 and 406 the same operations performed at steps 305 and 306 described above are performed but, according to this second embodiment, they are performed by the measuring point MsP. Then, steps 407-410 correspond to steps 308-311, respectively, of the flow chart of Figure 3. Again, a detailed description of these steps is omitted.

According to this second embodiment, the process of creating the selection policies is charge of the measuring point instead of the monitoring center. This allows decentralizing these operations and saving computational resources at the monitoring center.

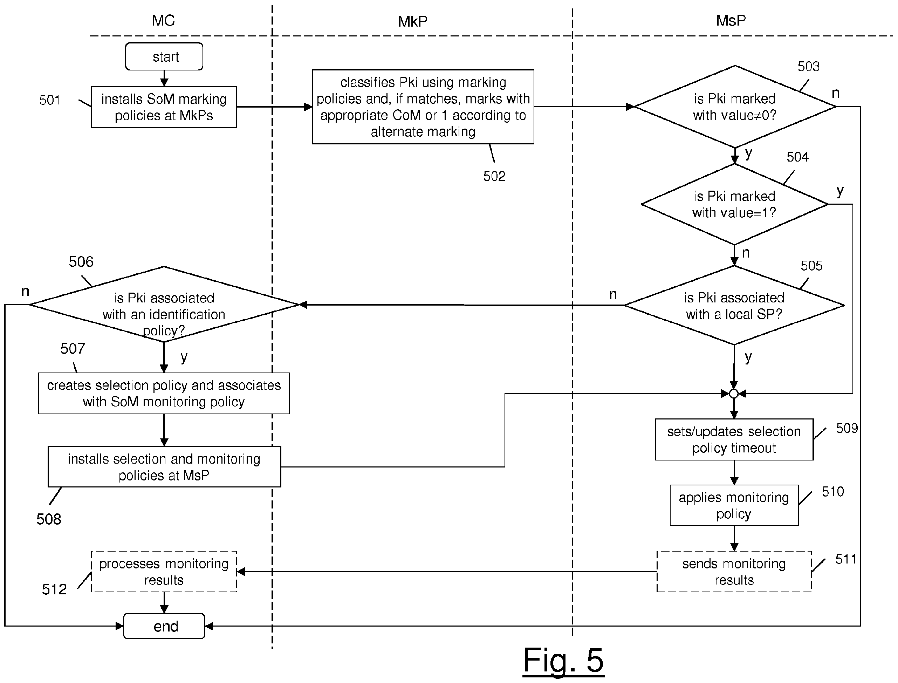

Figure 5 shows a flow chart describing a third embodiment of the method according to the present invention. According to this embodiment, the method allows packets to carry an "alternate marking" within the same packet's field or portion of field that is used for the CoM. The concept of the "alternate marking" is described in, for instance, WO 2010/072251 (in the name of the same Applicant) and is used for implementing a given SoM. In particular, the alternate marking allows applying to the packets a SoM providing a measurement of a data loss between a transmitting node and a receiving node of the communication network CN. It is to be noticed that such a SoM may be provided also according to the embodiments of Figure 3 and 4 described above. However, the flow charts of Figure 3 and 4 may apply for providing this SoM when the bits used for the alternate marking are different from those used for the CoM.

According to WO 2010/072251, a data loss for a given packet flow is computed in the following way:
- at the transmitting node, the packet flow is subdivided in blocks, each block having a duration of a block period determined by the expiration of a timer, wherein blocks including packets marked by a marking bit equal to 1 alternate with blocks including packets marked by the bit equal to 0 (this is the marking procedure referred to as "alternate marking");
- the transmitting node sets two counters which count, respectively, the packets marked by a the marking bit bi equal to 1 and the packets marked by the marking bit equal to 0;
- at the receiving node, the marking bit of the packets is read, and two other counters are set sup, which count, respectively, the received packets with the marking bit equal to 1 and the received packets with the marking bit equal to 0; and
- the values of four counters are cyclically sent by the transmitting node and the receiving node to a management server which calculates the data loss according to an operation which will not be described in greater detail herein after since it is not relevant to the present description.

For sake of example, the packet flows may be IP packet flows and the SoM provides for measuring the data loss of the packets of an IP packet flow on the basis of the IP source address and IP destination address. It is to be noticed that this is merely an example, as other types of data flows may be considered and other identifying attributes of the packets may be envisaged in alternative or in addition to the source and destination address.

For each user that has subscribed to this SoM, a marking point MkP is set up in the node (in particular, in correspondence of the IP ingress interface of the node) through which the packet flow PF of the user enters the communication network CN. In the marking point MkP, a marking policy is instantiated (step 501) containing a classification rule specifying that the packets Pki containing a specific couple of IP source address and IP destination address (as specified by the user when subscribing to the service) shall be marked as it will be described herein after. The marking policy also specifies the block period (e.g. 5 minutes) for the alternate marking and a safety interval (e.g. 5 minutes).

A number of measuring points MsP is also set up in correspondence of the IP ingress and egress interfaces of the nodes along the path of the packet flow PF.

At step 502, the marking point MkP preferably determines whether each packet Pki of the packet flow PF matches the classification rule of the marking policy of the given SoM. If the packet Pki matches the classification rule of the considered SoM marking policy, the marking point MkP preferably introduces in the marking field MF of the packet Pki an information relating to both a class of monitoring and an alternate marking, in the following way. According to this embodiment, the marking point MkP marks the packets Pki such that blocks of packets carrying a given class of monitoring alternate in time with blocks of packets carrying a predetermined fixed value different from zero.

It is to be noticed that, in case the "null" SoM is deployed within the communication network CN, if a packet Pki matches the classification rule of the marking policy of the "null" SoM and if the bits used for marking field MF have a value different from zero, the marking point MkP preferably modifies these bits and sets their value to zero. If a packet Pki matches the classification rule of the marking policy of the "null" SoM, and if the bits used for the marking field MF have a value equal to zero, the marking point MkP preferably does not modify these bits. In these cases, the marking point MkP preferably does not introduce in the marking field MF of the packet Pki any information relating to the alternate marking.

In case of an IP communication network, at layer 3, the 3 least significant bits of the DSCP field may be used as marking field MF. In this case, 8 values are available:
- value 0, which, as already described above, may indicate the absence of a CoM;
- value 1, which may be used by the alternate marking; and
- values 2-7, which may indicate a specific CoM.

Therefore, at step 502, if the packet Pki matches the classification rule of the considered SoM marking policy, the marking point MkP preferably marks the packets Pki alternatively with the specific class of monitoring (namely, with a value in the range 2-7) and with a value equal to 1, on a block-by-block basis. Therefore, packets belonging to the first block of the packet flow PF are marked with the proper CoM, packets belonging to the second block are marked with the value 1, packets belonging to the third block of the packet flow PF are marked with the proper CoM, and so on. Packets belonging to odd blocks are marked with the proper CoM while packets belonging to even blocks are marked with the value 1.

Steps 503-510 are then preferably applied to each packet Pki of the packet flow PF. At step 503, the measuring point MsP preferably controls the packet Pki and detects the marking field MF. From the value of the marking field MF, the measuring point MsP preferably determines whether the packet Pki is marked or not. If the packet is not marked (namely, the value contained in the marking field MF is zero), the procedure ends. If the packet is marked (namely, the marking field MF carries a value different from zero), the measuring point MsP, at step 504, preferably determines whether the value of the marking field MF is equal to the predetermined value used for the alternate marking, e.g. a value equal to 1 according to the example above. According to this embodiment, this check is affirmative for packets belonging to even blocks, while the check is negative for packets belonging to odd blocks.

In particular, if the packet Pki belongs to the first block of the packet flow PF, and, more in particular, when the first packet Pki of the packet flow PF arrives at the measuring point MsP, the check of step 504 is negative and the measuring point MsP, at step 505, preferably checks whether the packet Pki matches with a local selection policy. This check is similar to the one already described above with reference to step 304 of the flow chart of Figure 3. In particular, if the packet Pki does not match with any local selection policy, a request is sent to the monitoring center MC as already described above with reference to step 305 of Figure 3. The monitoring center MC then performs steps 506 to 508, which are similar to steps 305 to 307, respectively. Hence, a detailed description of these steps will be omitted here. The monitoring center MC, when installing on demand the selection policy, may also set a timer and/or a timeout (step 509) as already described above. When the further packets Pki of the first block arrive at the measuring point MsP, the check of step 505 is affirmative as they match with the local selection policy installed at the measuring point MsP upon reception of the first packet Pki of the packet flow PF. The check of step 505 is hence affirmative for all the packets Pki belonging to odd blocks. As depicted in the flow chart of Figure 5, this check is skipped for packets Pki belonging to even blocks as they also match with the local selection policy installed at the measuring point MsP upon reception of the first packet Pki of the packet flow PF.

According to this embodiment, in the selection policy the CoM is not used for selection purposes of the marked packets. Indeed, only packets belonging to the odd blocks, according to the example described above, are marked with the appropriate CoM, while the other packets are marked with the fixed value of 1. According to this embodiment, in case of an IP communication network, at layer 3, the identifying attributes of the marked packets that may be used in the identification policy and the selection policy may be one or more of the following: IP source address, IP destination address, transport protocol, source port, destination port, class of service. According to the example described above, in this case the identifying attributes may be the IP source address and the IP destination address of the packet.

Referring back to the flow chart of Figure 3, in case of affirmative checks at steps 504 or 505, the measuring point MsP finds a local selection policy matching with the marked packet Pki and preferably updates the timer associated with this local selection policy (step 509). The timer associated to the selection policy is configured to expire after a predetermined time interval since the reception of the last marked packet matching the local selection policy. The predetermined time interval is preferably substantially equal to two times the block period.

Then, the measuring point MsP preferably applies to the packet Pki the monitoring policy associated with the local selection policy (step 510). The packet Pki is hence subject to the monitoring actions specified in the monitoring policy (e.g. measurement of the packet loss).

At step 511, the measuring point MsP preferably sends the results of the monitoring actions performed on the packets Pki to the monitoring center MC, according to the monitoring policy, as it will be further described herein after. At step 512, the monitoring center MC preferably processes the monitoring results in order to derive information about the packet flow PF. As already described above, these steps may be performed periodically.

According to a variant of the embodiment described above with reference to the flow chart of Figure 5, steps 506 and 507 may be performed by the measuring point MsP instead of being performed by the monitoring center MC. In this case, as already described above with reference to the second embodiment of the present invention (Figure 4), the monitoring center MC preferably installs in advance the policies related to the SoM and the selection policy creation instructions at the measuring point MsP.

According to the third embodiment of the present invention, the exemplary SoM described above, which provides for measuring the data loss of the packets of an IP packet flow on the basis of the IP source address and IP destination address, is implemented by applying a monitoring policy as follows. For each packet flow (namely, each flow of packets containing a given couple of IP source and destination addresses), when the first packet carrying the appropriate CoM is detected, two counters are set up, one counter for counting the packets marked with the proper CoM and the other counter for counting the packets marked with the fixed value of 1. Each time a time period equal to the sum of the block period and the safety interval expires, the measuring point MsP sends to the monitoring center MC the value of the counter related to the preceding block period (indeed, this counter is not varying during the current block period) in order to calculate the data loss. The SoM is stopped for each considered packet flow when the measuring point realizes that the counter related to the packets marked with the appropriate CoM does not change any more (which means that the measuring point is not receiving packets marked with the appropriate CoM for a time interval greater than two times the block period). When the service is stopped, the counters for the considered packet flow are deactivated. Moreover, the last value of the counter related to the packets having marked with the fixed value of 1 is cancelled.

These operations will be now described with reference to the flowchart of Figure 5. After reception of the first packet marked with the appropriate CoM, steps 503 to 510 are preferably repeated for all the marked packets of the current block period. At step 510, the counter of the packets marked with the appropriate CoM counts the packets of this block period. At the end of the first block period, the measuring point MsP does not send the value of the counter to the monitoring center. After the first block period, the measuring point MsP receives a packet in which the value within the marking field MF is equal to 1. At this point, at step 503, the measuring point MsP preferably determines that the packet is marked and at step 504 it preferably determines that the packet is marked with fixed value 1. Then, the measuring point MsP preferably retrieves the corresponding selection policy, updates the timer of this selection policy (step 509) and applies the monitoring policy (step 510), which means that a counter counts the packets marked with the fixed value of 1. Steps 503, 504, 509 and 510 are preferably repeated for all the packets of the block period wherein the marking field MF has value equal to 1. At the end of the second block period, the measuring point MsP sends to the monitoring center the value of the counter related to the first block period (step 511). After the second block period, the measuring point MsP receives a packet in which the marking field MF carries the appropriate CoM and hence the entire procedure of steps 503 to 510 starts again for the new block of packets. Steps 503-510 are preferably repeated block by block and at the end of each block period the value of the counter related to the preceding block period is sent to the monitoring center MC (step 511).

According to this embodiment of the present invention, any measurement performed on the packets for monitoring purposes, such as the data loss measurement of WO 2010/072251 starts with a block of packets marked with an appropriate CoM..

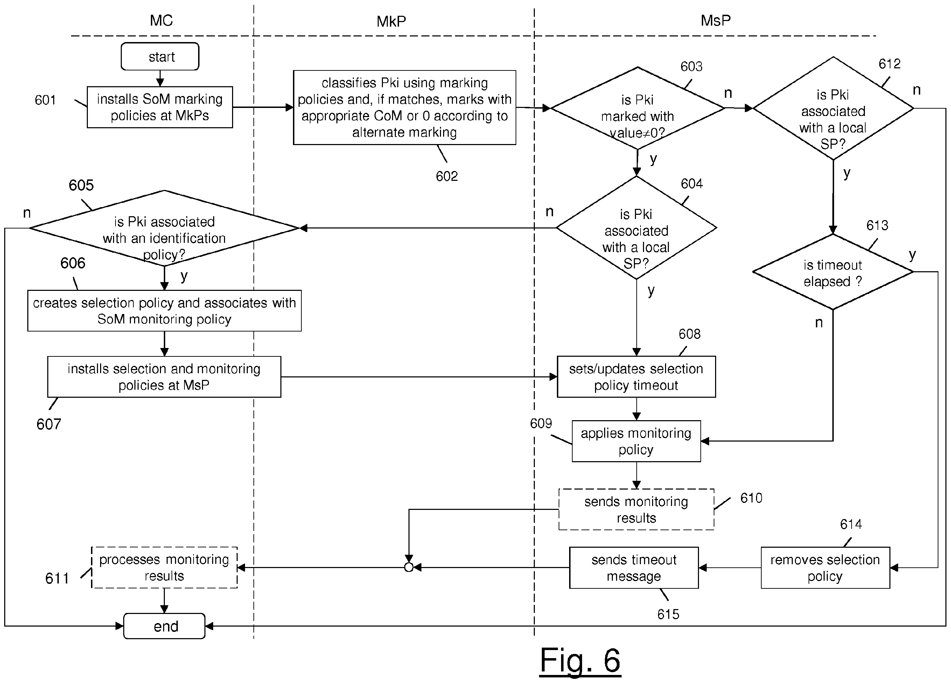

Figure 6 shows a flow chart describing a fourth embodiment of the method according to the present invention. Similarly to the third embodiment, the method of the fourth embodiment allows applying an "alternate marking" to packets of a given packet flow. According to this embodiment, packets carrying a given CoM alternate in time with packets that are not marked (namely, carrying a value equal to zero within the marking field MF), on a block-by-block basis.

For instance, in case of an IP communication network, at layer 3, when the 3 lest significant bits of the DSCP field are used as marking field MF the 8 available values are used as follows:
- value 0, which, as already described above, may indicate the absence of a CoM; and
- values 1-7, each indicating a specific CoM.

At step 601, the marking policy is installed in the marking point MkP by the monitoring center MC. According to this policy, at step 602, the marking point MkP preferably marks the packets Pki matching the marking policy alternatively with a given class of monitoring (namely, with a value in the range 1-7) and with a value equal to 0 on a block-by-block basis. Therefore, packets belonging to the first block of the packet flow PF are marked with the proper CoM, packets belonging to the second block are marked with the value 0, packets belonging to the third block are marked with the proper CoM, and so on. Packets belonging to odd blocks are marked with the proper CoM while packets belonging to even blocks are marked with the value 0.

It is to be noticed that, in case the "null" SoM is deployed within the communication network CN, if a packet Pki matches the classification rule of the marking policy of the "null" SoM and if the bits used for marking field MF have a value different from zero, the marking point MkP preferably modifies these bits and sets their value to zero. If a packet Pki matches the classification rule of the marking policy of the "null" SoM, and if the bits used for the marking field MF have a value equal to zero, the marking point MkP preferably does not modify these bits. In these cases, the marking point MkP preferably does not introduce in the marking field MF of the packet Pki any information relating to the alternate marking.

Step 603-609 are then applied to each packet Pki of the packet flow PF. At step 603, the measuring point MsP preferably controls the packet Pki and detects the marking field MF. From the value of the marking field MF, the measuring point MsP preferably determines whether the packet Pki is marked or not. If the packet is marked (namely, the marking field MF carries a value different from zero), the measuring point MsP, at step 604, preferably determines whether the packet Pki matches a local selection policy. This control is preferably performed on the basis of one or more identifying attributes of the packet. According to this embodiment, in case of an IP communication network, at layer 3, the identifying attributes of the marked packets may be one or more of the following: IP source address, IP destination address, transport protocol, source port, destination port, class of service. The class of monitoring is not used in the selection policy as it is relevant only for packets belonging to odd blocks of the packet flow PF. Steps 605 to 609 are the same as steps 506 to 510 described above with reference to the flow chart of Figure 5. Hence a detailed description of these steps is omitted here. They are preferably repeated for each packet Pki belonging to an odd block of the packet flow PF.

If, at step 603, the measuring point MsP determines that the packet is not marked (namely, the value contained in the marking field MF is zero), the measuring point MsP preferably checks whether the packet Pki matches with a local selection policy (step 612). If the check is negative, the procedure ends. If the check is affirmative (which means that the packet is belonging to an even block of the packet flow to be monitored), the measuring point MsP preferably checks (step 613) whether the timer of this selection policy is elapsed. In the affirmative (which means that the measuring point is not receiving marked packets - namely, packets carrying the appropriate CoM - for a time interval greater than two times the block period), the selection policy is removed (step 614), the service is stopped and the counters are deactivated. Then, a message is sent from the measuring point MsP to the monitoring center MC indicating that the last value of the counter related to the packets having the marking field MF equal to 0 should be cancelled (step 615). If the timer is not yet elapsed, the measuring point MsP preferably applies the monitoring policy (step 609) and the procedure continues. Steps 612 and 613 are preferably repeated for all the packets of an even block period.

Also according to this fourth embodiment of the present invention, any measurement performed on the packets for monitoring purposes starts with a block of packets marked with an appropriate CoM (with value different from zero). Moreover, in this case, if the packet flow ends with a block of packets having the marking field MF equal to 0, the measurement performed on this block of packets is discarded by the monitoring center MC, as it can not determine whether it is a block of packets to be monitored or not.

According to a variant of the embodiment described above with reference to the flow chart of Figure 6, steps 605 and 606 may be performed by the measuring point MsP instead of being performed by the monitoring center MC. In this case, as already described above with reference to the second embodiment of the present invention (Figure 4), the monitoring center MC preferably installs in advance the policies related to the SoM and the selection policy creation instructions at the measuring point MsP.

Advantageously, this fourth embodiment of the method of the present invention allows introducing in a packet, at the same time, the alternate marking and the CoM even when a single bit is available. Indeed, in this case, the marking field MF may carry the value 1 when the packets is marked and belongs to an odd block of the packet flow PF, and the value 0 for indicate the absence of marking in packets belonging to even blocks.

Other SoMs may be implemented on the basis of the procedures described herein above with reference to Figures 5 and 6, for measuring a data loss and/or an inter-arrival jitter and/or a delay of the packets. In particular, in addition to the counters counting the packets with the alternate marking, the measuring point MsP may generate timestamps in correspondence of the time at which predetermined packets within the packet flow PF are received, for instance the first packet of the packet flow and the last packet of the packet flow are received at a measuring point MsP. According to another example, the measuring point MsP may generate four timestamps in association with the alternate marking: a first timestamp in correspondence of the time at which the first marked packet (namely, marked with the appropriate CoM) is received, a second timestamp in correspondence of the time at which the last marked packet is received, a third timestamp in correspondence of the time at which the first packet with the marking field equal to 1 (according to the third embodiment) or 0 (according to the fourth embodiment) is received, and a fourth counter in correspondence of the time at which the last packet with the marking field equal to 1 (according to the third embodiment) or 0 (according to the fourth embodiment) is received. The timestamps may be sent to the monitoring center MC together with the counters at predefined time instants.

It is to be noticed that the SoMs described herein above are examples of SoMs that may be applied to a packet flow according to the present invention. These examples are however non limiting the scope of the present invention, as the methods described above with reference to, for instance, the flow charts of Figures 3 and 4 may be applied for implementing any SoM that may be defined in the communication network CN.

According to the present invention, the class of monitoring may be mapped on more than one protocol layer of the protocol suite of the communication network. For instance, the packet flow to be monitored may enter the communication network as an IP packet flow, and along its path through the network may be encapsulated in an MPLS tunnel. The class of monitoring may be mapped in a field of the MPLS header of the packet, such as a tag. In this way, the marking information is maintained across the different layers, namely, in this example, from layer 3 to layer 2.5. As a result, the MPLS packets are marked and an MPLS SoM may be applied. The marking information may then be mapped in a field of the Ethernet header so that an Ethernet SoM may be applied. Therefore, advantageously, the present invention allows to provide a multilevel integrated monitoring.

As mentioned above, restoration may be implemented for marked packets of a packet flow PF at an egress node of the communication network CN. When a marked packet Pki arrives at the egress node, the restoration point ReP instantiated therein preferably applies the restoration policy. If the packet matches the classification rule(s) of the restoration policy, the bits of the marking field MF are restored to a value specified in the restoration policy. For instance, as widely described above, in an IP communication network, at layer 3, the 3 least significant bits of the DSCP field may be used as marking field MF. In this case, at a restoration point ReP, these bits may be restored to their original value.

It is to be noticed that, in case the "null" SoM is deployed within the communication network CN, if a packet Pki, at a restoration point ReP, matches the classification rule of the restoration policy of the "null" SoM, the value of the bits of the marking field MF is restored to the value specified in the restoration policy of the "null" SoM.

The present invention has a number of advantages.

The marking of a packet flow with a class of monitoring as provided by the present invention allows avoiding to indiscriminately monitor all the packet flows being routed within the communication network, as provided by known tracing algorithms. Moreover, the present invention allows avoiding to configure a priori the routing device for tracing the packet flows. Indeed, according to the present invention, the operation of marking the packets is performed according to a marking policy which is instantiated at a single marking point upon subscription by the user to a given SoM. The marking policy may then be cancelled when the user unsubscribe to the service. Therefore, only the packet flow of interest for the user is marked. The marking is performed at a single point of access of the packet flow to the communication network while the monitoring is performed at a number of points along the route of the packets. The marking policy allows preselecting the packet flow, at a single entry point, on the basis of predefined attributes of the packet flow comprised within the header of the packets. This pre-selection need not be performed also in the measuring points. At the measuring point, indeed, it is the presence of the marking that automatically identifies the packet as a packet to be monitored (no further checks are needed for this purpose) and triggers the implementation of the service.

The method according to the present invention advantageously allows a minimal pre-configuration of the network nodes. Indeed, it strictly requires that only the marking policy is installed at the ingress node for a user, and that, optionally, the restoration policy is installed at the egress node for the same user. The other nodes (e.g. the nodes hosting the measurement points) may not be preconfigured at all, thanks to the dynamic management of the selection policies and the monitoring policies. The number of classification rules to be installed in the network nodes is hence minimized.

Moreover, the enforcement of a SoM is advantageously automatic thanks to the identification and selection policies, and it is made highly efficient by the "on demand" installation of the selection policy and the monitoring policy at a measuring point. The dynamic management the selection and monitoring policies allows adapting the service to changing conditions under which the SoM is applied, for instance changing number of service subscribers.

The marking procedure according to the present invention allows providing high flexibility in the implementation of a SoM. For instance, it allows monitoring the packet flows of the subscribers of the given service by turns: provided that the total number of subscribers is M, it is possible to configure the system to monitor, for instance, M/6 different subscribers every 10 minutes in an hour. In this case, only the marking point shall be modified while the measuring points need not be reconfigured.

When a new subscriber subscribes to a SoM which is already provisioned in the communication network for other users, it is only necessary to add a marking point at the network entry point of the packet flow of the new subscriber. This marking point may be efficiently cancelled once the new subscriber unsubscribe to the service. The measuring points need not to be configured or reconfigured, at most a selection policy shall be added or updated, as described above.

For the reasons above, the present invention allows to efficiently implement subscription based SoMs. For sake of example, the present invention allows to efficiently implement a SoM (e.g. a packet tracing service) for the users that, within the 24 hours before the service activation, made a complaint about the network performances (e.g. reduced data download capacity), and those users shall be substituted with other users on a day-by-day basis. In this case, the present invention provides for dynamically adapting the selection policy and activating the subscription based service in a very efficient manner.

## Claims

1. A method for monitoring a data flow (PF) in a communication network (CN), said method comprising:
a) associating said data flow (PF) with a class of monitoring associated with a service of monitoring to be applied to said data flow (PF) by marking data units (Pki) of said data flow (PF) by setting a feature of said data units (Pki) to a value indicating said class of monitoring;
b) determining said class of monitoring by detecting said feature in said data units (Pki) and associating said data units (Pki) with said service of monitoring on the basis of said class of monitoring; and
c) applying said service of monitoring for monitoring said data flow (PF),
wherein said applying said service of monitoring is performed according to a monitoring policy which is associated with said service of monitoring and specifies one or more monitoring actions to be performed on said marked data units (Pki),
and wherein said marking comprises subdividing said data flow (PF) in first blocks and second blocks, said first blocks alternating in time with said second blocks, by setting said feature of the data units (Pki) of said first blocks to said value indicating said class of monitoring, wherein said value indicating said class of monitoring is higher than 1, and setting said feature of the data units (Pki) of said second blocks to a predetermined value equal to 1.

2. A method for monitoring a data flow (PF) in a communication network (CN), said method comprising:
a) associating said data flow (PF) with a class of monitoring associated with a service of monitoring to be applied to said data flow (PF) by marking data units (Pki) of said data flow (PF) by setting a feature of said data units (Pki) to a value indicating said class of monitoring;
b) determining said class of monitoring by detecting said feature in said data units (Pki) and associating said data units (Pki) with said service of monitoring on the basis of said class of monitoring; and
c) applying said service of monitoring for monitoring said data flow (PF),
wherein said applying said service of monitoring is performed according to a monitoring policy which is associated with said service of monitoring and specifies one or more monitoring actions to be performed on said marked data units (Pki),
and wherein said marking comprises subdividing said data flow (PF) in first blocks and second blocks, said first blocks alternating in time with said second blocks, by setting said feature of the data units (Pki) of said first blocks to said value indicating said class of monitoring, wherein said value indicating said class of monitoring is different from 0, and setting said feature of the data units (Pki) of said second blocks to a predetermined value equal to 0.

3. The method according to claim 1 or 2, wherein said marking comprises mapping the class of monitoring into a marking field (MF) of said data units (Pki).

4. The method according to any of the preceding claims, wherein said associating said data units (Pki) with a service of monitoring is performed according to an identification policy, said identification policy comprising at least one identification rule associating said class of monitoring with said service of monitoring.

5. The method according to claim 1 or 2, wherein said associating said data units (Pki) with a service of monitoring is performed on the basis of said class of monitoring and one or more identifying attributes of said data flow (PF)

6. The method according to claim 5, wherein said associating said data units (Pki) with a service of monitoring is performed according to an identification policy, said identification policy comprising at least one identification rule associating said class of monitoring and said one or more identifying attributes of said data flow (PF) with said service of monitoring.

7. The method according to claim 6, wherein said at least one identification rule comprises one or more ranges for the one or more identifying attributes of said packet flow (PF) and the method further comprises selecting a subset of data units (Pki) on the basis of a selection policy comprising one or more further ranges for the one or more identifying attributes of said data flow (PF), said further ranges being equal to or smaller than the ranges of said identification rule.

8. The method according to claim 7, wherein said selecting comprises sending a request to a monitoring center (MC) comprising said class of monitoring and said one or more identifying attributes, and receiving from the monitoring center (MC) said selection policy.

9. The method according to any of the preceding claims, wherein said value indicating said class of monitoring is different from zero and wherein the method further comprises setting said feature to a value equal to zero in further data units belonging to a further data flow if said further data flow is not to be monitored.

10. The method according to any of the preceding claims, wherein it further comprises restoring said feature of said data units (Pki) from said value indicating said class of monitoring to a further value associated with said service of monitoring.

11. A node (N1) for a communication network (CN), said node (N1) being configured to monitor a data flow (PF), said node (N1) comprising:
- a marking point (MkP) configured to associate said data flow (PF) with a class of monitoring associated with a service of monitoring to be applied to said data flow (PF) by marking data units (Pki) of said data flow (PF) by setting a feature of said data units to a value indicating said class of monitoring, wherein said marking comprises subdividing said data flow (PF) in first blocks and second blocks, said first blocks alternating in time with said second blocks, by setting said feature of the data units (Pki) of said first blocks to said value indicating said class of monitoring, wherein said value indicating said class of monitoring is higher than 1, and setting said feature of the data units (Pki) of said second blocks to a predetermined value equal to 1; and
- a measuring point (MsP) configured to determine said class of monitoring by detecting said feature in said data units (Pki) and associate said data units (Pki) with siaid service of monitoring on the basis of said class of monitoring, and to apply said service of monitoring for monitoring said data flow (PF) according to a monitoring policy which is associated with said service of monitoring and specifies one or more monitoring actions to be performed on said marked data units (Pki).

12. A node (N1) for a communication network (CN), said node (N1) being configured to monitor a data flow (PF), said node (N1) comprising:
- a marking point (MkP) configured to associate said data flow (PF) with a class of monitoring associated with a service of monitoring to be applied to said data flow (PF) by marking data units (Pki) of said data flow (PF) by setting a feature of said data units to a value indicating said class of monitoring, wherein said marking comprises subdividing said data flow (PF) in first blocks and second blocks, said first blocks alternating in time with said second blocks, by setting said feature of the data units (Pki) of said first blocks to said value indicating said class of monitoring, wherein said value indicating said class of monitoring is different from 0, and setting said feature of the data units (Pki) of said second blocks to a predetermined value equal to 0; and
- a measuring point (MsP) configured to determine said class of monitoring by detecting said feature in said data units (Pki) and associate said data units (Pki) with siaid service of monitoring on the basis of said class of monitoring, and to apply said service of monitoring for monitoring said data flow (PF) according to a monitoring policy which is associated with said service of monitoring and specifies one or more monitoring actions to be performed on said marked data units (Pki).

13. A communication network (CN) comprising a node (N1) according to claim 11 or 12.

## Patentansprüche

1. Verfahren zum Überwachen eines Datenstroms (PF) in einem Kommunikationsnetzwerk (CN), wobei das Verfahren Folgendes umfasst:
a) Verknüpfen des Datenstroms (PF) mit einer Überwachungsklasse, die mit einem Überwachungsdienst verknüpft ist, der auf den Datenstrom (PF) anzuwenden ist, durch Kennzeichnen von Dateneinheiten (Pki) des Datenstroms (PF) durch Einstellen eines Merkmals der Dateneinheiten (Pki) auf einen Wert, der die Überwachungsklasse anzeigt;
b) Bestimmen der Überwachungsklasse durch Detektieren des Merkmals in den Dateneinheiten (Pki) und Verknüpfen der Dateneinheiten (Pki) mit dem Überwachungsdienst auf Basis der Überwachungsklasse und
c) Anwenden des Überwachungsdienstes zum Überwachen des Datenstroms (PF),
wobei das Anwenden des Überwachungsdienstes gemäß einer Überwachungsrichtlinie durchgeführt wird, die mit dem Überwachungsdienst verknüpft ist und eine oder mehrere Überwachungsmaßnahmen spezifiziert, die an den gekennzeichneten Dateneinheiten (Pki) durchzuführen sind,
und wobei das Kennzeichnen das Unterteilen des Datenstroms (PF) in erste Blöcke und zweite Blöcke umfasst, wobei sich durch Einstellen des Merkmals der Dateneinheiten (Pki) der ersten Blöcke auf den Wert, der die Überwachungsklasse anzeigt, wobei der Wert, der die Überwachungsklasse anzeigt, höher ist als 1, und Einstellen des Merkmals der Dateneinheiten (Pki) der zweiten Blöcke auf einen vorbestimmten Wert von 1 die ersten Blöcke zeitlich mit den zweiten Blöcken abwechseln.

2. Verfahren zum Überwachen eines Datenstroms (PF) in einem Kommunikationsnetzwerk (CN), wobei das Verfahren Folgendes umfasst:
a) Verknüpfen des Datenstroms (PF) mit einer Überwachungsklasse, die mit einem Überwachungsdienst verknüpft ist, der auf den Datenstrom (PF) anzuwenden ist, durch Kennzeichnen von Dateneinheiten (Pki) des Datenstroms (PF) durch Einstellen eines Merkmals der Dateneinheiten (Pki) auf einen Wert, der die Überwachungsklasse anzeigt;
b) Bestimmen der Überwachungsklasse durch Detektieren des Merkmals in den Dateneinheiten (Pki) und Verknüpfen der Dateneinheiten (Pki) mit dem Überwachungsdienst auf Basis der Überwachungsklasse und
c) Anwenden des Überwachungsdienstes zum Überwachen des Datenstroms (PF),
wobei das Anwenden des Überwachungsdienstes gemäß einer Überwachungsrichtlinie durchgeführt wird, die mit dem Überwachungsdienst verknüpft ist und eine oder mehrere Überwachungsmaßnahmen spezifiziert, die an den gekennzeichneten Dateneinheiten (Pki) durchzuführen sind,
und wobei das Kennzeichnen das Unterteilen des Datenstroms (PF) in erste Blöcke und zweite Blöcke umfasst, wobei sich durch Einstellen des Merkmals der Dateneinheiten (Pki) der ersten Blöcke auf den Wert, der die Überwachungsklasse anzeigt, wobei der Wert, der die Überwachungsklasse anzeigt, ein anderer als 0 ist, und Einstellen des Merkmals der Dateneinheiten (Pki) der zweiten Blöcke auf einen vorbestimmten Wert von 0 die ersten Blöcke zeitlich mit den zweiten Blöcken abwechseln.

3. Verfahren nach Anspruch 1 oder 2, wobei das Kennzeichnen das Zuordnen der Überwachungsklasse zu einem Kennzeichnungsfeld (MF) der Dateneinheiten (Pki) umfasst.

4. Verfahren nach einem der vorhergehenden Ansprüche, wobei das Verknüpfen der Dateneinheiten (Pki) mit einem Überwachungsdienst gemäß einer Identifikationsrichtlinie durchgeführt wird, wobei die Identifikationsrichtlinie mindestens eine Identifikationsregel umfasst, die die Überwachungsklasse mit dem Überwachungsdienst verknüpft.

5. Verfahren nach Anspruch 1 oder 2, wobei das Verknüpfen der Dateneinheiten (Pki) mit einem Überwachungsdienst auf Basis der Überwachungsklasse und einem oder mehreren Identifikationsattributen des Datenstroms (PF) durchgeführt wird.

6. Verfahren nach Anspruch 5, wobei das Verknüpfen der Dateneinheiten (Pki) mit einem Überwachungsdienst gemäß einer Identifikationsrichtlinie durchgeführt wird, wobei die Identifikationsrichtlinie mindestens eine Identifikationsregel umfasst, die die Überwachungsklasse und das eine oder die mehreren Identifikationsattribute des Datenstroms (PF) mit dem Überwachungsdienst verknüpft.

7. Verfahren nach Anspruch 6, wobei die mindestens eine Identifikationsregel einen oder mehrere Bereiche für das eine oder die mehreren Identifikationsattribute des Paketstroms (PF) umfasst und das Verfahren ferner das Auswählen eines Untersatzes von Dateneinheiten (Pki) auf Basis einer Auswahlrichtlinie umfasst, die einen oder mehrere weitere Bereiche für das eine oder die mehreren Identifikationsattribute des Datenstroms (PF) umfasst, wobei die weiteren Bereiche gleich oder kleiner als die Bereiche der Identifikationsregel sind.

8. Verfahren nach Anspruch 7, wobei das Auswählen das Senden einer Anforderung an ein Überwachungszentrum (MC), die die Überwachungsklasse und das eine oder die mehreren Identifikationsattribute umfasst, und das Empfangen der Auswahlrichtlinie vom Überwachungszentrum (MC) umfasst.

9. Verfahren nach einem der vorhergehenden Ansprüche, wobei der Wert, der die Überwachungsklasse anzeigt, ein anderer ist als null und wobei das Verfahren ferner das Einstellen des Merkmals in weiteren Dateneinheiten, die zu einem weiteren Datenstrom gehören, auf einen Wert von null umfasst, wenn der weitere Datenstrom nicht überwacht werden soll.

10. Verfahren nach einem der vorhergehenden Ansprüche, wobei es ferner das Wiederherstellen des Merkmals der Dateneinheiten (Pki) vom Wert, der die Überwachungsklasse anzeigt, zu einem weiteren Wert, der mit dem Überwachungsdienst verknüpft ist, umfasst.

11. Knoten (N1) für ein Kommunikationsnetzwerk (CN), wobei der Knoten (N1) dazu ausgelegt ist, einen Datenstrom (PF) zu überwachen, wobei der Knoten (N1) Folgendes umfasst:
- einen Kennzeichnungspunkt (MkP), der dazu ausgelegt ist, den Datenstrom (PF) mit einer Überwachungsklasse zu verknüpfen, die mit einem Überwachungsdienst verknüpft ist, der durch Kennzeichnen von Dateneinheiten (Pki) des Datenstroms (PF) durch Einstellen eines Merkmals der Dateneinheiten auf einen Wert, der die Überwachungsklasse anzeigt, auf den Datenstrom (PF) anzuwenden ist, wobei das Kennzeichnen das Unterteilen des Datenstroms (PF) in erste Blöcke und zweite Blöcke umfasst, wobei sich durch Einstellen des Merkmals der Dateneinheiten (Pki) der ersten Blöcke auf den Wert, der die Überwachungsklasse anzeigt, wobei der Wert, der die Überwachungsklasse anzeigt, höher ist als 1, und Einstellen des Merkmals der Dateneinheiten (Pki) der zweiten Blöcke auf einen vorbestimmten Wert von 1 die ersten Blöcke zeitlich mit den zweiten Blöcken abwechseln; und
- einen Messpunkt (MsP), der dazu ausgelegt ist, durch Detektieren des Merkmals in den Dateneinheiten (Pki) die Überwachungsklasse zu bestimmen und auf Basis der Überwachungsklasse die Dateneinheiten (Pki) mit dem Überwachungsdienst zu verknüpfen und den Überwachungsdienst zum Überwachen des Datenstroms (PF) gemäß einer Überwachungsrichtlinie, die mit dem Überwachungsdienst verknüpft ist und eine oder mehrere Überwachungsmaßnahmen, die an den gekennzeichneten Dateneinheiten (Pki) durchzuführen sind, anzuwenden.

12. Knoten (N1) für ein Kommunikationsnetzwerk (CN), wobei der Knoten (N1) dazu ausgelegt ist, einen Datenstrom (PF) zu überwachen, wobei der Knoten (N1) Folgendes umfasst:
- einen Kennzeichnungspunkt (MkP), der dazu ausgelegt ist, den Datenstrom (PF) mit einer Überwachungsklasse zu verknüpfen, die mit einem Überwachungsdienst verknüpft ist, der durch Kennzeichnen von Dateneinheiten (Pki) des Datenstroms (PF) durch Einstellen eines Merkmals der Dateneinheiten auf einen Wert, der die Überwachungsklasse anzeigt, auf den Datenstrom (PF) anzuwenden ist, wobei das Kennzeichnen das Unterteilen des Datenstroms (PF) in erste Blöcke und zweite Blöcke umfasst, wobei sich durch Einstellen des Merkmals der Dateneinheiten (Pki) der ersten Blöcke auf den Wert, der die Überwachungsklasse anzeigt, wobei der Wert, der die Überwachungsklasse anzeigt, ein anderer als 0 ist, und Einstellen des Merkmals der Dateneinheiten (Pki) der zweiten Blöcke auf einen vorbestimmten Wert von 0 die ersten Blöcke zeitlich mit den zweiten Blöcken abwechseln; und
- einen Messpunkt (MsP), der dazu ausgelegt ist, durch Detektieren des Merkmals in den Dateneinheiten (Pki) die Überwachungsklasse zu bestimmen und auf Basis der Überwachungsklasse die Dateneinheiten (Pki) mit dem Überwachungsdienst zu verknüpfen und den Überwachungsdienst zum Überwachen des Datenstroms (PF) gemäß einer Überwachungsrichtlinie, die mit dem Überwachungsdienst verknüpft ist und eine oder mehrere Überwachungsmaßnahmen, die an den gekennzeichneten Dateneinheiten (Pki) durchzuführen sind, anzuwenden.

13. Kommunikationsnetzwerk (CN), das einen Knoten (N1) nach Anspruch 11 oder 12 umfasst.

## Revendications

1. Procédé de surveillance d'un flux de données (PF) dans un réseau de communication (CN), ledit procédé comprenant les étapes ci-dessous consistant à :
a) associer ledit flux de données (PF) à une classe de surveillance associée à un service de surveillance à appliquer audit flux de données (PF) en marquant des unités de données (Pki) dudit flux de données (PF) en définissant une caractéristique desdites unités de données (Pki) sur une valeur indiquant ladite classe de surveillance ;
b) déterminer ladite classe de surveillance en détectant ladite caractéristique dans lesdites unités de données (Pki) et en associant lesdites unités de données (Pki) audit service de surveillance sur la base de ladite classe de surveillance ; et
c) appliquer ledit service de surveillance pour surveiller ledit flux de données (PF) ;
dans lequel ladite étape d'application dudit service de surveillance est mise en oeuvre conformément à une politique de surveillance qui est associée audit service de surveillance et spécifie une ou plusieurs actions de surveillance à mettre en oeuvre sur lesdites unités de données marquées (Pki) ; et
dans lequel ladite étape de marquage consiste à subdiviser ledit flux de données (PF) en des premiers blocs et en des seconds blocs, lesdits premiers blocs alternant dans le temps avec lesdits seconds blocs, en définissant ladite caractéristique des unités de données (Pki) desdits premiers blocs sur ladite valeur indiquant ladite classe de surveillance, dans lequel ladite valeur indiquant ladite classe de surveillance est supérieure à 1, et en définissant ladite caractéristique des unités de données (Pki) desdits seconds blocs sur une valeur prédéterminée égale à 1.

2. Procédé de surveillance d'un flux de données (PF) dans un réseau de communication (CN), ledit procédé comprenant les étapes ci-dessous consistant à :
a) associer ledit flux de données (PF) à une classe de surveillance associée à un service de surveillance à appliquer audit flux de données (PF) en marquant des unités de données (Pki) dudit flux de données (PF) en définissant une caractéristique desdites unités de données (Pki) sur une valeur indiquant ladite classe de surveillance ;
b) déterminer ladite classe de surveillance en détectant ladite caractéristique dans lesdites unités de données (Pki) et en associant lesdites unités de données (Pki) audit service de surveillance sur la base de ladite classe de surveillance ; et
c) appliquer ledit service de surveillance pour surveiller ledit flux de données (PF) ;
dans lequel ladite étape d'application dudit service de surveillance est mise en oeuvre conformément à une politique de surveillance qui est associée audit service de surveillance et spécifie une ou plusieurs actions de surveillance à mettre en oeuvre sur lesdites unités de données marquées (Pki) ; et
dans lequel ladite étape de marquage consiste à subdiviser ledit flux de données (PF) en des premiers blocs et en des seconds blocs, lesdits premiers blocs alternant dans le temps avec lesdits seconds blocs, en définissant ladite caractéristique des unités de données (Pki) desdits premiers blocs sur ladite valeur indiquant ladite classe de surveillance, dans lequel ladite valeur indiquant ladite classe de surveillance est différente de 0, et en définissant ladite caractéristique des unités de données (Pki) desdits seconds blocs sur une valeur prédéterminée égale à 0.

3. Procédé selon la revendication 1 ou 2, dans lequel ladite étape de marquage comprend l'étape consistant à mettre en correspondance la classe de surveillance dans un champ de marquage (MF) desdites unités de données (Pki).

4. Procédé selon l'une quelconque des revendications précédentes, dans lequel ladite étape d'association desdites unités de données (Pki) à un service de surveillance est mise en oeuvre selon une politique d'identification, ladite politique d'identification comprenant au moins une règle d'identification associant ladite classe de surveillance audit service de surveillance.

5. Procédé selon la revendication 1 ou 2, dans lequel ladite étape d'association desdites unités de données (Pki) à un service de surveillance est mise en oeuvre sur la base de ladite classe de surveillance et d'un ou plusieurs attributs d'identification dudit flux de données (PF).

6. Procédé selon la revendication 5, dans lequel ladite étape d'association desdites unités de données (Pki) à un service de surveillance est mise en oeuvre selon une politique d'identification, ladite politique d'identification comprenant au moins une règle d'identification associant ladite classe de surveillance et ledit un ou lesdits plusieurs attributs d'identification dudit flux de données (PF) audit service de surveillance.

7. Procédé selon la revendication 6, dans lequel ladite au moins une règle d'identification comprend une ou plusieurs plages pour ledit un ou lesdits plusieurs attributs d'identification dudit flux de données (PF) et le procédé comprend en outre l'étape consistant à sélectionner un sous-ensemble d'unités de données (Pki) sur la base d'une politique de sélection comprenant une ou plusieurs plages supplémentaires pour ledit un ou lesdits plusieurs attributs d'identification dudit flux de données (PF), lesdites plages supplémentaires étant égales ou inférieures aux plages de ladite règle d'identification.

8. Procédé selon la revendication 7, dans lequel ladite étape de sélection comprend l'étape consistant à envoyer une demande, à un centre de surveillance (MC), comprenant ladite classe de surveillance et ledit un ou lesdits plusieurs attributs d'identification, et l'étape consistant à recevoir ladite politique de sélection en provenance du centre de surveillance (MC).

9. Procédé selon l'une quelconque des revendications précédentes, dans lequel ladite valeur indiquant ladite classe de surveillance est différente de zéro, et dans lequel le procédé comprend en outre l'étape consistant à définir ladite caractéristique sur une valeur égale à zéro dans des unités de données supplémentaires appartenant à un flux de données supplémentaire, si ledit flux de données supplémentaire ne doit pas être surveillé.

10. Procédé selon l'une quelconque des revendications précédentes, dans lequel le procédé comprend en outre l'étape consistant à restaurer ladite caractéristique desdites unités de données (Pki) depuis ladite valeur indiquant ladite classe de surveillance jusqu'à une valeur supplémentaire associée audit service de surveillance.

11. Noeud (N1) pour un réseau de communication (CN), ledit noeud (N1) étant configuré de manière à surveiller un flux de données (PF), ledit noeud (N1) comprenant :
- un point de marquage (MkP) configuré de manière à associer ledit flux de données (PF) à une classe de surveillance associée à un service de surveillance à appliquer audit flux de données (PF) en marquant des unités de données (Pki) dudit flux de données (PF) en définissant une caractéristique desdites unités de données sur une valeur indiquant ladite classe de surveillance, dans lequel ladite étape de marquage comprend l'étape consistant à subdiviser ledit flux de données (PF) en des premiers blocs et en des seconds blocs, lesdits premiers blocs alternant dans le temps avec lesdits seconds blocs, en définissant ladite caractéristique des unités de données (Pki) desdits premiers blocs sur ladite valeur indiquant ladite classe de surveillance, dans laquelle ladite valeur indiquant ladite classe de surveillance est supérieure à 1, et en définissant ladite caractéristique des unités de données (Pki) desdits seconds blocs sur une valeur prédéterminée égale à 1 ; et
- un point de mesure (MsP) configuré de manière à déterminer ladite classe de surveillance en détectant ladite caractéristique dans lesdites unités de données (Pki), à associer lesdites unités de données (Pki) audit service de surveillance sur la base de ladite classe de surveillance, et à appliquer ledit service de surveillance pour surveiller ledit flux de données (PF) selon une politique de surveillance qui est associée audit service de surveillance et spécifie une ou plusieurs actions de surveillance à mettre en oeuvre sur lesdites unités de données marquées (Pki).

12. Noeud (N1) pour un réseau de communication (CN), ledit noeud (N1) étant configuré de manière à surveiller un flux de données (PF), ledit noeud (N1) comprenant :
- un point de marquage (MkP) configuré de manière à associer ledit flux de données (PF) à une classe de surveillance associée à un service de surveillance à appliquer audit flux de données (PF) en marquant des unités de données (Pki) dudit flux de données (PF) en définissant une caractéristique desdites unités de données sur une valeur indiquant ladite classe de surveillance, dans lequel ladite étape de marquage comprend l'étape consistant à subdiviser ledit flux de données (PF) en des premiers blocs et en des seconds blocs, lesdits premiers blocs alternant dans le temps avec lesdits seconds blocs, en définissant ladite caractéristique des unités de données (Pki) desdits premiers blocs sur ladite valeur indiquant ladite classe de surveillance, dans laquelle ladite valeur indiquant ladite classe de surveillance est différente de 0, et en définissant ladite caractéristique des unités de données (Pki) desdits seconds blocs sur une valeur prédéterminée égale à 0 ; et
- un point de mesure (MsP) configuré de manière à déterminer ladite classe de surveillance en détectant ladite caractéristique dans lesdites unités de données (Pki), à associer lesdites unités de données (Pki) audit service de surveillance sur la base de ladite classe de surveillance, et à appliquer ledit service de surveillance pour surveiller ledit flux de données (PF) selon une politique de surveillance qui est associée audit service de surveillance et spécifie une ou plusieurs actions de surveillance à mettre en oeuvre sur lesdites unités de données marquées (Pki).

13. Réseau de communication (CN) comprenant un noeud (N1) selon la revendication 11 ou 12.
